(19) Europäisches Patentamt
European Patent Office
Office européen des brevets

(11) EP 2 513 002 B1

# (12) EUROPEAN PATENT SPECIFICATION

(45) Date of publication and mention of the grant of the patent:
**16.03.2016 Bulletin 2016/11**

(21) Application number: **10801737.7**

(22) Date of filing: **16.12.2010**

(51) Int Cl.:
*C03C 25/10* (2006.01) *C03C 25/32* (2006.01)
*C03C 25/62* (2006.01) *C03C 25/26* (2006.01)
*C08G 18/67* (2006.01) *C08F 290/14* (2006.01)
*C09D 175/16* (2006.01) *C08G 18/08* (2006.01)

(86) International application number:
**PCT/US2010/060652**

(87) International publication number:
**WO 2011/075549 (23.06.2011 Gazette 2011/25)**

## (54) LED CURING OF RADIATION CURABLE OPTICAL FIBER COATING COMPOSITIONS

LED-AUSHÄRTUNG VON STRAHLUNGSHÄRTBAREN GLASFASERBESCHICHTUNGSZUSAMMENSETZUNGN

DURCISSEMENT PAR DIODE ÉLECTROLUMINESCENTE DE COMPOSITIONS DE REVÊTEMENT DE FIBRES OPTIQUES DURCISSABLES PAR RAYONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2009 US 287567 P**

(43) Date of publication of application:
**24.10.2012 Bulletin 2012/43**

(73) Proprietor: **DSM IP Assets B.V.**
**6411 TE Heerlen (NL)**

(72) Inventors:
- **BISHOP, Timothy**
  **Algonquin**
  **IL 60102 (US)**
- **GAN, Keqi**
  **Geneva**
  **IL 60134 (US)**

(74) Representative: **V.O.**
**P.O. Box 87930**
**2508 DH Den Haag (NL)**

(56) References cited:
**EP-A1- 1 591 470**
**WO-A1-98/50317**
**WO-A1-2010/077132**
**US-A1- 2005 222 295**
**US-A1- 2006 084 713**
**US-A1- 2008 226 909**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 513 002 B1

## Description

Field of the Invention

The present invention is directed to a process for coating an optical fiber.

Background of the Invention

The use of ultraviolet mercury arc lamps to emit ultraviolet light suitable to cure radiation curable coatings applied to optical fiber is well known. Ultraviolet arc lamps emit light by using an electric arc to excite mercury that resides inside an inert gas (e.g., Argon) environment to generate ultraviolet light which effectuates curing. Alternatively, microwave energy can also be used to excite mercury lamps in an inert gas medium to generate the ultraviolet light. Throughout this patent application, arc excited and microwave excited mercury lamp, plus various additives (ferrous metal, Gallium, etc.) modified forms of these mercury lamps are identified as mercury lamps.

However, the use of ultraviolet mercury lamps as a radiation source suffers from several disadvantages including environmental concerns from mercury and the generation of ozone as a by-product. Further, mercury lamps typically have lower energy conversion ratio, require warm-up time, generate heat during operation, and consume a large amount of energy when compared with LED. {In the production of coated optical fiber, the heat generated by the UV mercury lamps can negatively impact the liquid coating in that if the coating is not formulated to avoid the presence of volatiles, those volatiles may be excited and deposit upon the quartz tube surface, blocking the UV rays from irradiating the liquid coating on the glass fiber which inhibits the curing of the liquid coating to a solid.} Accordingly, alternative radiation sources are being investigated.

Light emitting diodes (LEDs) are semiconductor devices which use the phenomenon of electroluminescence to generate light. LEDs consist of a semiconducting material doped with impurities to create a p-n junction capable of emitting light as positive holes join with negative electrons when voltage is applied. The wavelength of emitted light is determined by the materials used in the active region of the semiconductor. Typical materials used in semiconductors of LEDs include, for example, elements from Groups 13 (III) and 15 (V) of the periodic table. These semiconductors are referred to as III-V semiconductors and include, for example, GaAs, GaP, GaAsP, AlGaAs, InGaAsP, AlGaInP, and InGaN semiconductors. Other examples of semiconductors used in LEDs include compounds from Group 14 (IV-IV semiconductor) and Group 12-16 (II-VI). The choice of materials is based on multiple factors including desired wavelength of emission, performance parameters, and cost.

Early LEDs used gallium arsenide (GaAs) to emit infrared (IR) radiation and low intensity red light. Advances in materials science have led to the development of LEDs capable of emitting light with higher intensity and shorter wavelengths, including other colors of visible light and UV light. It is possible to create LEDs that emit light anywhere from a low of about 100 nm to a high of about 900nm. Currently, known LED UV light sources emit light at wavelengths between about 300 and about 475 nm, with 365 nm, 390 nm and 395 nm being common peak spectral outputs. See textbook, "Light-Emitting Diodes" by E. Fred Schubert, 2nd Edition, © E. Fred Schubert 2006, published by Cambridge University Press.

LED lamps offer advantages over mercury lamps in curing applications. For example, LED lamps do not use mercury to generate UV light and are typically less bulky than mercury UV arc lamps. In addition, LED lamps are instant on/off sources requiring no warm-up time, which contributes to LED lamps' low energy consumption. LED lamps also generate much less heat, with higher energy conversion efficiency, have longer lamp lifetimes, and are essentially monochromatic emitting a desired wavelength of light which is governed by the choice of semiconductor materials employed in the LED.

Several manufacturers offer LED lamps for commercial curing applications. For example, Phoseon Technology, Summit UV Honle UV America, Inc., IST Metz GmbH, Jenton International Ltd., Lumios Solutions Ltd., Solid UV Inc., Seoul Optodevice Co., Ltd, Spectronics Corporation, Luminus Devices Inc., and Clearstone Technologies, are some of the manufacturers currently offering LED lamps for curing ink-jet printing compositions, PVC floor coating compositions, metal coating compositions, plastic coating composition, and adhesive compositions.

In the known UV curing applications for dental work, there are existing LED curing devices available. An example of a known curing device for dental work is the Elipar™ FreeLight 2 LED curing light from 3M ESPE. This device emits light in the visible region with a peak irradiance at 460nm.

LED equipment is also being tested in the ink-jet printing market: IST Metz has publicly presented a demonstration of its entrance into UV curing via LED. This company says it has been working on LED based UV curing technology over the past several years, primarily for the inkjet market, where this technology is currently used.

Current radiation curable optical fiber coating compositions are not suitable for curing by LED lamps because heretofore these compositions have been formulated to be cured by mercury lights which produce a different spectral output, namely a spectral output over several wavelengths. Though currently available "conventionally curing" UV curable

coatings for optical fiber may actually begin to cure when exposed to light from an LED light source, the cure speed is so slow the coating would not cure at the currently industry standard "fast" line speeds of upwards of 1500 meters/minute. Therefore, it is not practical to use currently available LED lamps to cure currently available radiation curable coatings for optical fiber.

U.S. Patent No. 7,399,982 ("the ’982 patent") states that it provides a method of UV curing coatings or printings on various objects, particularly objects such as wires, cables, tubes, tubing, hoses, pipes, CDs, DVDs, golf balls, golf tees, eye glasses, contact lenses, string instruments, decorative labels, peelable labels, peelable stamps, doors, and countertops. While the ’982 patent mentions optical fibers in the background or in the context of the mechanical configuration of the coating apparatus, it does not disclose a coating composition, or ingredients thereof, that is coated and cured successfully on an optical fiber using UV-LED. Thus, there is no enabling disclosure of LED curable coatings for optical fiber in the ’982 patent.

U.S. Patent Application Publication No. 2007/0112090 ("the ’090 publication") states that it provides an LED radiation curable rubber composition comprising an organopolysiloxane having a plurality of (meth)acryloyl groups, a radiation sensitizer, and an optional titanium-containing organic compound. The ’090 publication states that the composition is useful as a protective coating agent or a sealing agent for the electrodes of liquid crystal displays, organic electronic displays, flat panel displays, and for other electrical and electronic components. The ’090 publication states, in the Description of the prior art, that a prior art patent’s (U.S. Patent No. 4,733,942) UV curable composition comprising organopolysiloxane having a plurality of vinyl functional groups such as acryloyloxy groups or (meth)acryloyloxy groups is unable to meet the demand or requirement that the composition should be curable by UV-LED, due to slow curing rates. Further, the ’090 publication states that another prior art patent (U.S. Patent No. 6,069,186) proposed a radiation-curable silicone rubber composition comprising an organopolysiloxane, which contained one radiation-sensitive organic group containing a plurality of (meth)acryloyloxy groups at each of the molecular chain terminals, a photosensitizer, and an organosilicon compound that contains no alkoxy group. According to the ’090 publication, the composition of the ’186 patent did not satisfy the above demand. Thus, there is no enabling disclosure of LED curable coatings for optical fiber in the ’090 publication or in any of the documents (the ’942 patent and the ’186 patent) cited therein.

U.S. Patent Application Publication No. 2003/0026919 ("the ’919 publication") states that it discloses an optical fiber resin coating apparatus having an ultraviolet flash lamp used for coating an optical fiber by an ultraviolet curing resin, a lamp lighting circuit for making the ultraviolet flash lamp emit light, and a control circuit for controlling this lamp lighting circuit. The ’919 publication states that, as the ultraviolet light source, at least one ultraviolet laser diode or ultraviolet light emitting diode may be used instead of an ultraviolet flash lamp. While the ’919 publication mentions that epoxy-based acrylate resin as an example of an ultraviolet curing resin, it does not provide details on the resin or on a composition comprising such resin. The ’919 publication does not disclose an optical fiber coating composition comprising at least one acrylate oligomer, at least one photoinitiator, and at least one reactive diluent monomer that is coated and cured successfully on an optical fiber using LED light. Thus, there is no enabling disclosure of a composition of a LED radiation curable coating for optical fiber in the ‘919 publication.

PCT Published Patent Application WO 2005/103121, entitled "Method for photocuring of Resin Compositions", assigned to DSM IP Assets B.V., describes and claims Methods for Light Emitting Diode (LED) curing of a curable resin composition containing a photoinitiating system, characterized in that the highest wavelength at which absorption maximum of the photoinitiating system occurs (λMax PIS) is at least 20 nm below, and at most 100 nm below, the wavelength at which the emission maximum of the LED occurs (λLED). The invention in this PCT patent application relates to the use of LED curing in structural applications, in particular in applications for the lining or relining of objects, and to objects containing a cured resin composition obtained by LED curing. This invention provides a simple, environmentally safe and readily controllable method for (re)lining pipes, tanks and vessels, especially for such pipes and equipment having a large diameter, in particular more than 15 cm. Thus, there is no enabling disclosure of a composition of a LED radiation curable coating for optical fiber in the WO 2005/103121 publication.

U.S. Published Patent Application 20100242299, published on September 30, 2010 described and claims a rotatably indexable and stackable apparatus and method for UV curing an elongated member or at least one UV-curable ink, coating or adhesive applied thereon is further disclosed, comprising at least one UV-LED mounted on one side of the elongated member, and an elliptically-shaped reflector positioned on the other side of the elongated member opposite the at least one UV-LED.

In the same patent family as U.S. Published Patent Application 20100242299, US Issued Patent 7,175,712, issued on February 13, 2007 describes and claims a UV curing apparatus and method is provided for enhancing the distribution and application of UV light to UV photo initiators in a UV curable ink, coating or adhesive. The UV curing apparatus and method comprises UV LED assemblies in a first row with the UV LED assemblies spaced from adjacent UV LED assemblies. At least one second row of a plurality of UV LED assemblies are provided next to the first row but with the UV LED assemblies of the second row positioned adjacent the spaces between adjacent UV LED assemblies in the first row thereby to stagger the second row of UV LED assemblies from the UV LED assemblies in the first row. Desirably, the rows of staggered UV LED assemblies are mounted on a panel. UV curable products, articles or other

objects containing UV photo initiators that are in or on a web can be conveyed or otherwise moved past the rows of UV LED assemblies for effective UV curing. This arrangement facilitates more uniformly application of UV light on the UV curable ink, coating and/or adhesives in the UV curable products, articles or other objects. The apparatus can include one or more of the following: rollers for moving the web, mechanisms for causing the panel to move in an orbital or reciprocal path, and an injection tube for injecting a non-oxygen gas in the area of UV light curing.

The foregoing shows that there is an unmet need to provide radiation curable optical fiber coating compositions which are suitable for curing by LED light, to provide processes for coating optical fiber with such coating compositions, and to provide coated optical fiber comprising coatings prepared from such coating compositions.

## Summary Of The Invention

The first aspect of the instant claimed invention is a process for coating an optical fiber as defined in claim 1. Also disclosed is a radiation curable coating composition for an optical fiber, wherein the composition is capable of undergoing photopolymerization when coated on an optical fiber and when irradiated by a light emitting diode (LED) light, having a wavelength from 100 nm to 900 nm, to provide a cured coating on the optical fiber, said cured coating having a top surface, said cured coating having a Percent Reacted Acrylate Unsaturation (%RAU) at the top surface of 60 % or greater.

Also disclosed is a radiation curable coating composition, wherein the light emitting diode (LED) light has a wavelength of

- from 100 nm to 300 nm;
- from 300 nm to 475 nm; or
- from 475 nm to 900 nm.

Also disclosed is a radiation curable coating composition, said composition comprising:

(a) at least one urethane (meth)acrylate oligomer;
(b) at least one reactive diluent monomer; and
(c) at least one photoinitiator.

Also disclosed is a radiation curable coating composition, wherein the photoinitiator is a Type I photoinitiator.

Also disclosed is a radiation curable coating composition, wherein the photoinitiator is a Type II photoinitiator and the composition includes a hydrogen donor.

Also disclosed is a radiation curable coating composition, wherein the coating composition is selected from the group consisting of a primary coating composition, a secondary coating composition, an ink coating composition, a buffer coating composition, a matrix coating composition and an Upjacketing coating composition.

Also disclosed is a radiation curable coating composition, in which at least 15 % of the ingredients in the coating are bio-based, rather than petroleum based, preferably at least 20 % of the ingredients, more preferably at least 25 % of the ingredients.

In accordance with the first aspect of the instant claimed invention the process for coating an optical fiber comprises:

(a) providing a glass optical fiber,
(b) coating said glass optical fiber with at least one radiation curable coating composition for an optical fiber, wherein said at least one radiation curable coating composition comprises:

(i) at least one urethane (meth) acrylate oligomer;
(ii) at least one reactive diluent monomer; and
(iii) at least one photoinitiator;

to obtain a coated glass optical fiber with an uncured coating, and
(c) curing said uncured coating on said coated glass optical fiber by irradiating said uncured coating with a light emitting diode (LED) light, having a wavelength from 100 nm to 900 nm, to obtain a cured coating having a top surface, said cured coating having a % Reacted Acrylate Unsaturation (%RAU) at the top surface of 60% or greater.

Also disclosed is a process, wherein said glass optical fiber is provided by operating a glass draw tower to produce the glass optical fiber.

Also disclosed is a process, wherein the glass draw tower is operated at a line speed of the optical fiber from

100 m/min to 2500 m/min, such as from 1000 m/min to 2400 m/min, or from 1200 m/min to 2300 m/min.

Also disclosed is a process, wherein the light emitting diode (LED) light has a wavelength of

- from 100 nm to 300 nm;
- from 300 nm to 475 nm; or
- from 475 nm to 900 nm.

Also disclosed is a process, wherein the photoinitiator is a Type I photoinitiator.

Also disclosed is a process, wherein the photoinitiator is a Type II photoinitiator and the composition includes a hydrogen donor.

Also disclosed is a coated optical fiber which is obtainable by the process of first aspect of the instant claimed invention.

Also disclosed is a coated optical fiber, wherein the coating composition is selected from the group consisting of a primary coating composition, a secondary coating composition, an ink coating composition, a buffer coating composition, a matrix coating composition and an Upjacketing coating composition.

Also disclosed is a radiation curable coating composition for an optical fiber comprising:

(a) at least one urethane (meth) acrylate oligomer;
(b) at least one reactive diluent monomer; and
(c) at least one photoinitiator;

wherein the composition is capable of undergoing photopolymerization when coated on an optical fiber and when irradiated by a light emitting diode (LED) light, having a wavelength from 100 nm to 900nm, to provide a cured coating on the optical fiber, said cured coating having a top surface, said cured coating having a Percent Reacted Acrylate Unsaturation (%RAU) at the top surface of 60% or greater.

Also disclosed is a coated optical fiber comprising an optical fiber and at least one coating, wherein said at least one coating is produced by coating the optical fiber with at least one radiation curable coating composition for an optical fiber comprising:

(a) at least one urethane (meth) acrylate oligomer;
(b) at least one reactive diluent monomer; and
(c) at least one photoinitiator;

to obtain an uncured coated optical fiber, and curing said uncured coated optical fiber by irradiating with a light emitting diode (LED) light having a wavelength from 100 nm to 900nm, to obtain a cured coating having a top surface, said cured coating having a Percent Reacted Acrylate Unsaturation (%RAU) at the top surface of 60% or greater.

Also disclosed is a process for coating an optical fiber comprising:

(a) operating a glass draw tower to produce a glass optical fiber;
(b) coating said glass optical fiber with at least one radiation curable coating composition for an optical fiber, wherein said at least one radiation curable coating composition comprises:

(i) at least one urethane (meth) acrylate oligomer;
(ii) at least one reactive diluent monomer; and
(iii) at least one photoinitiator;

to obtain a coated glass optical fiber with an uncured coating, and
(c) curing said uncured coating on said coated glass optical fiber by irradiating said uncured coating with a light emitting diode (LED) light, having a wavelength from 100 nm to 900nm, to obtain a cured coating having a top surface, said cured coating having a % Reacted Acrylate Unsaturation (%RAU) at the top surface of 60% or greater.

Also disclosed is a radiation curable optical fiber coating composition, wherein the light emitting diode (LED) light has a wavelength from 100 nm to 300nm.

Also disclosed is a radiation curable optical fiber coating composition, wherein the light emitting diode (LED) light has a wavelength from 300 nm to 475nm.

Also disclosed is a radiation curable optical fiber coating composition, wherein the light emitting diode (LED) light has a wavelength from 475 nm to 900nm.

Also disclosed is a radiation curable optical fiber coating composition, wherein the photoinitiator is a Type I

photoinitiator.

Also disclosed is a radiation curable optical fiber coating composition, wherein the photoinitiator is a Type II photoinitiator and the composition includes a hydrogen donor.

Also disclosed is a radiation curable optical fiber coating composition, wherein the coating composition is selected from the group consisting of a primary coating composition, a secondary coating composition, an ink coating composition, a buffer coating composition, a matrix coating composition and an Upjacketing coating composition.

Also disclosed is a radiation curable optical fiber coating composition, in which at least 15% of the ingredients in the coating are bio-based, rather than petroleum based.

Also disclosed is a radiation curable optical fiber coating composition, in which at least 20% of the ingredients in the composition are bio-based, rather than petroleum based.

Also disclosed is a radiation curable optical fiber coating composition, in which at least 25% of the ingredients in the composition are bio-based, rather than petroleum based.

Also disclosed is a coated optical fiber, wherein the light emitting diode (LED) light has a wavelength from 100 nm to 300nm.

Also disclosed is a coated optical fiber, wherein the light emitting diode (LED) light has a wavelength from 300 nm to 475nm.

Also disclosed is a coated optical fiber, wherein the light emitting diode (LED) light has a wavelength from 475 nm to 900nm.

Also disclosed is a coated optical fiber, wherein the photoinitiator is a Type I photoinitiator.

Also disclosed is a coated optical fiber, wherein the photoinitiator is a Type II photoinitiator and the composition includes a hydrogen donor.

Also disclosed is a coated optical fiber, wherein the coating composition is selected from the group consisting of a primary coating composition, a secondary coating composition, an ink coating composition, a buffer coating composition, a matrix coating composition, and an Upjacketing coating composition.

Also disclosed is a process, wherein the line speed of the optical fiber is from 100 m/min to 2500 m/min.

Also disclosed is a process, wherein the line speed of the optical fiber is from 1000 m/min to 2400 m/min.

Also disclosed is a process, wherein the line speed of the optical fiber is from 1200 m/min to 2300 m/min.

## Detailed Description of the Invention

Throughout this patent application the following terms have the indicated meanings:

Optical Fiber: a glass fiber that carries light along its inner core. Light is kept in the core of the optical fiber by total internal reflection. This causes the fiber to act as a waveguide. The fiber consists of a core surrounded by a cladding layer, both of which are made of dielectric materials. To confine the optical signal in the core, the refractive index of the core must be greater than that of the cladding.

In a typical Single Mode (see definition below) optical fiber the outside diameter of the glass core is from 8 to 10 microns. In a typical MultiMode (see definition below) optical fiber the outside diameter of the glass core is from 50 to 62.5 microns. In a typical optical fiber, the outside diameter of the Cladding, is about 125 microns. (see diagram, page 98, article entitled "Optical Fiber Coatings" by Steven R. Schmid and Anthony F. Toussaint, DSM Desotech, Elgin, Illinois, Chapter 4 of Specialty Optical Fibers Handbook, edited by Alexis Mendez and T.F. Morse, ©2007 by Elsevier Inc.)

Optical Fibers which support many propagation paths or transverse modes are called MultiMode fibers (MMF), while those which can only support a single mode are called Single Mode fibers (SMF).

Primary Coating: is defined as the coating in contact with the cladding layer of an optical fiber. The primary coating is applied directly to the glass fiber and, when cured, forms a soft, elastic, adherent, and compliant material which encapsulates the glass fiber. The primary coating serves as a buffer to cushion and protect the glass fiber core when the fiber is bent, cabled, spooled or otherwise handled. During the early years of development of glass optical fibers, the Primary Coating was sometimes referred to as the "inner primary coating". The outside diameter of the Primary Coating, is from 155 to 205 microns. (see diagram, page 98, article entitled "Optical Fiber Coatings" by Steven R. Schmid and Anthony F. Toussaint, DSM Desotech, Elgin, Illinois, Chapter 4 of Specialty Optical Fibers Handbook, edited by Alexis Mendez and T.F. Morse, ©2007 by Elsevier Inc.)

Secondary Coating: The secondary coating is applied over the primary coating and functions as a tough, protective outer layer that prevents damage to the glass fiber during processing and use. Certain characteristics are desirable for the secondary coating. Before curing, the secondary coating composition should have a suitable viscosity and be capable of curing quickly to enable processing of the optical fiber. After curing, the secondary coating should have the following characteristics: sufficient stiffness to protect the encapsulated, glass fiber yet enough flexibility for handling (i.e., modulus), low water absorption, low tackiness to enable handling of the optical fiber, chemical resistance, and sufficient adhesion to the primary coating.

To achieve the desired characteristics, conventional secondary coating compositions generally contain urethane-based oligomers in large concentration with monomers being introduced into the secondary coating composition as reactive diluents to lower the viscosity.

During the early years of development of glass optical fibers, the Secondary Coating was sometimes referred to as the "outer primary coating". On a typical glass optical fiber the outside diameter of the Secondary Coating, is from 240 to 250 microns.

Ink or Ink Coating: is a radiation curable coating comprising pigments or dyes that cause the visible color of the coating to match one of several standard colors used in identifying optical fiber upon installation. An alternative to the use of an ink coating is to use a secondary coating that comprises pigments or dyes. A secondary coating that comprises pigments and/or dyes is also known as a "colored secondary" coating. On a typical glass optical fiber the typical thickness of an Ink or Ink Coating is from 3 microns to 10 microns.

Matrix or Matrix Coating: is used to fabricate a fiber optic ribbon. A fiber optic ribbon includes a plurality of substantially planar, substantially aligned optical fibers and a radiation curable matrix material encapsulating the plurality of optical fibers.

Loose Tube Configuration: as an alternative to being fabricated into a fiber optic ribbon, optical fibers may be field deployed in what is known as a "loose-tube" configuration. A Loose Tube Configuration is when many fibers are positioned in a hollow protective tube. The fibers may be surrounded by a protective jelly in the Loose Tube or they may be surrounded by another type of protective material or the Loose Tube may only contain optical fibers.

Upjacketing or Upjacketing Coating: is a radiation curable coating that is applied over a colored secondary coating or over an ink coating layer in a relatively thick amount, which causes the outer diameter of the coated optical fiber to increase to a desired thickness of 400 micron, 500 micron, or 600 micron or 900 micron "tight buffered" fibers. These diameters are also used to described the finished upjacketed optical fibers as either 400 micron, 500 micron, or 600 micron or 900 micron "tight buffered" fibers

Radiation Curable Primary Coatings and Secondary Coatings and Ink Coatings, and Matrix Coatings and Upjacketing Coatings for Optical Fiber are described and claimed in U.S. Patent No.'s: 4472019; 4496210; 4514037; 4522465; 4624994; 4629287; 4682851; 4806574; 4806694; 4844604; 4849462; 4932750;

5093386; 5219896; 5292459; 5336563; 5416880; 5456984; 5496870; 5502145; 5596669; 5664041; 5696179; 5712035; 5787218; 5804311; 5812725; 5837750; 5845034; 5859087; 5847021; 5891930; 5907023; 5913004; 5933559; 5958584; 5977202; 5986018; 5998497;

6,014,488; 6023547; 6040357; 6052503;6054217; 6063888; 6080483; 6085010; 6107361; 6110593; 6130980; 6136880; 6169126; 6180741; 6187835; 6191187; 6197422; 6214899; 6240230; 6246824; 6298189 ; 6301415; 6306924; 6309747; 6319549; 6323255; 6339666; 6359025; 6350790; 6362249; 6376571; 6391936; 6438306; 6472450; 6528553; 6534557; 6538045; 6563996; 6579618; 6599956; 6630242; 6638616; 6661959; 6714712; 6775451; 6797740; 6852770; 6858657; 6961508;

7041712; 7067564; 7076142; 7122247; 7135229; 7155100; 7171103; 7214431; 7221841; 7226958; 7276543; and 7493000.

UVA radiation is radiation with a wavelength between 320 and 400nm.

UVB radiation is radiation with a wavelength between 280 and 320nm.

UVC radiation is radiation with a wavelength between 100 and 280nm.

As used herein, the term "renewable resource material" is defined as a starting material that is not derived from petroleum but as a starting material derived from a plant including the fruits, nuts and/or seeds of plants. These plant derived materials are environmentally friendly and biologically based materials. Thus, these starting materials are also frequently called "bio-based" materials or "natural oil" materials.

Further to the understood definition of "bio-based" , according to the FRSIA(Farm Security and Rural Investment Act), "biobased products" are products determined by the U.S. Secretary of Agriculture to be "commercial or industrial goods (other than food or feed) composed in whole or in significant part of biological products, forestry materials, or renewable domestic agricultural materials, including plant, animal or marine materials.

Biobased content may be determined by testing to ASTM Method D6866-10, STANDARD TEST METHODS FOR DETERMINING THE BIOBASED CONTENT OF SOLID, LIQUID, AND GASEOUS SAMPLES USING RADIOCARBON ANALYSIS. This method, similar to radiocarbon dating, compares how much of a decaying carbon isotope remains in a sample to how much would be in the same sample if it were made of entirely recently grown materials. The percentage is called the product's biobased content.

Persons of ordinary skill in the art of radiation curable coatings are aware of how to select ingredients and understand whether the ingredient is bio-based or petroleum based. What is different now is the sheer abundance of bio-based raw materials suitable for use in radiation curable coatings. For example, bio-based raw materials can be found in polyols and other ingredients.

Also disclosed is a radiation curable coating composition for an optical fiber comprising:

(a) at least one urethane (meth) acrylate oligomer;

(b) at least one reactive diluent monomer; and
(c) at least one photoinitiator;

wherein the composition is capable of undergoing photopolymerization when coated on an optical fiber and when irradiated by a light emitting diode (LED) light, having a wavelength from 100 nm to 900nm, to provide a cured coating on the optical fiber, said cured coating having a top surface, said cured coating having a Percent Reacted Acrylate Unsaturation (%RAU) at the top surface of 60% or greater.

Urethane (meth)acrylate oligomers are well known in the art of radiation curable coatings for optical fiber. See pages 103-104 of article entitled "Optical Fiber Coatings" by Steven R. Schmid and Anthony F. Toussaint, DSM Desotech, Elgin, Illinois, Chapter 4 of Specialty Optical Fibers Handbook, edited by Alexis Mendez and T.F. Morse, ©2007 by Elsevier Inc., for a succinct summary of these types of oligomers. For further descriptions of Urethane (meth)acrylate oligomers suitable for use in the instant claimed invention please see the U.S. Patents, previously listed in this document.

As stated on pages 103-104 of the article, "Optical Fiber Coatings" as described in the preceding paragraph, Urethane (meth)acrylate oligomers are based on stoichiometric combinations of di-isocyanates (DICs), polyols and some type of hydroxy-functional terminating species containing a UV-reactive terminus....Depending on the properties desired, different types of polyols are chosen. These polyols include, but are not limited to, polyether-polypropylene glycol (PPG) and polyether-polytetramethylene glycol (PTMG) Typically Polyols are used in the synthesis of Urethane (meth)acrylate oligomers.

Petroleum-derived components of urethane (meth)acrylate oligomers such as polyester and polyether polyols pose several disadvantages. Use of such polyester or polyether polyols contributes to the depletion of petroleum-derived oil, which is a non-renewable resource. Also, the production of a polyol requires the investment of a great deal of energy because the oil needed to make the polyol must be drilled, extracted and transported to a refinery where it is refined and processed to purified hydrocarbons that are subsequently converted to alkoxides and finally to the finished polyols. As the consuming public becomes increasingly aware of the environmental impact of this production chain, consumer demand for "greener" products will continue to grow. To help reduce the depletion of petroleum-derived oil whilst satisfying this increasing consumer demand, it would be advantageous to partially or wholly replace petroleum-derived polyester or polyether polyols used in the production of urethane (meth)acrylate oligomers with renewable and more environmentally responsible components.

Reactive Diluent Monomers are well known in the art of radiation curable coatings for optical fiber. See pages 105 of the article entitled "Optical Fiber Coatings" by Steven R. Schmid and Anthony F. Toussaint, DSM Desotech, Elgin, Illinois, Chapter 4 of Specialty Optical Fibers Handbook, edited by Alexis Mendez and T.F. Morse, ©2007 by Elsevier Inc., for a succinct summary of these types of reactive diluent monomers. For further descriptions of reactive diluent monomers suitable for use in the instant claimed invention please see the U.S. Patents, previously listed in this document.

In consultation with suppliers of raw materials used in the manufacture o0f radiation curable coatings for optical fiber it is possible to identify bio-based alternative raw materials for selective inclusion in the coatings. By emphasizing the importance of choosing to synthesize the oligomer and the coating made with the oligomer with bio-based raw materials it is possible to synthesize radiation curable coatings for Optical Fiber wherein at least 15% of the ingredients in the coating are bio-based, rather than petroleum based.

In an embodiment, the radiation curable Optical Fiber coating composition of the instant claimed invention is such that at least 15% of the ingredients in the coating are bio-based, rather than petroleum based.

In an embodiment, the radiation curable Optical Fiber coating composition of the instant claimed invention is such that at least 20% of the ingredients in the coating are bio-based, rather than petroleum based.

In an embodiment, the radiation curable Optical Fiber coating composition of the instant claimed invention is such that at least 25% of the ingredients in the coating are bio-based, rather than petroleum based.

The compositions of the present invention include a free radical photoinitiator as urethane (meth)acrylate oligomers require a free radical photoinitiator. In general, Photoinitiators are well known in the art of radiation curable coatings for optical fiber. See pages 105 of the article entitled "Optical Fiber Coatings" by Steven R. Schmid and Anthony F. Toussaint, DSM Desotech, Elgin, Illinois, Chapter 4 of Specialty Optical Fibers Handbook, edited by Alexis Mendez and T.F. Morse, ©2007 by Elsevier Inc., for a succinct summary of these types of photoinitiators. For further descriptions of photoinitiators suitable for use in the instant claimed invention please see the U.S. Patents, previously listed in this document.

Typically, free radical photoinitiators are divided into those that form radicals by cleavage, known as "Norrish Type I" and those that form radicals by hydrogen abstraction, known as "Norrish type II". The "Norrish type II" photoinitiators require a hydrogen donor, which serves as the free radical source.

To successfully formulate a radiation curable coating for optical fibers, , it is necessary to review the wavelength sensitivity of the photoinitiator(s) present in the coating to determine if they will be activated by the LED light chosen to provide the curing light.

For LED light sources emitting in the 300 - 475nm wavelength range, suitable photoinitiators absorbing in this

area are selected from: benzoylphosphine oxides, such as, for example, 2,4,6-trimethylbenzoyl diphenylphosphine oxide (Lucirin TPO from BASF) and 2,4,6-trimethylbenzoyl phenyl, ethoxy phosphine oxide (Lucirin TPO-L from BASF), bis(2,4,6-trimethylbenzoyl)-phenylphosphineoxide (Irgacure 819 or BAPO from Ciba), 2-methyl-1-[4-(methylthio)phenyl]-2-morpholinopropanone-1 (Irgacure 907 from Ciba), 2-benzyl-2-(dimethylamino)-1-[4-(4-morpholinyl) phenyl]-1-butanone (Irgacure 369 from Ciba), 2-dimethylamino-2-(4-methyl-benzyl)-1-(4-morpholin-4-yl-phenyl)-butan-1-one (Irgacure 379 from Ciba), 4-benzoyl-4'-methyl diphenyl sulphide (Chivacure BMS from Chitec), 4,4'- bis(diethylamino) benzophenone (Chivacure EMK from Chitec), and 4,4'-bis(N,N'-dimethylamino) benzophenone (Michler's ketone). Also suitable are mixtures thereof.

Additionally, photosensitizers are useful in conjunction with photoinitiators in effecting cure with LED light sources emitting in this wavelength range. Examples of suitable photosensitizers include: anthraquinones, such as 2-methylanthraquinone, 2-ethylanthraquinone, 2-tertbutylanthraquinone, 1-chloroanthraquinone, and 2-amylanthraquinone, thioxanthones and xanthones, such as isopropyl thioxanthone, 2-chlorothioxanthone, 2,4-diethylthioxanthone, and 1-chloro-4-propoxythioxanthone, methyl benzoyl formate (Darocur MBF from Ciba), methyl-2-benzoyl benzoate (Chivacure OMB from Chitec), 4-benzoyl-4'-methyl diphenyl sulphide (Chivacure BMS from Chitec), 4,4'- bis(diethylamino) benzophenone (Chivacure EMK from Chitec).

When photosensitizers are employed, other photoinitiators absorbing at shorter wavelengths can be used. Examples of such photoinitiators include: benzophenones, such as benzophenone, 4-methyl benzophenone, 2,4,6-trimethyl benzophenone, and dimethoxybenzophenone, and 1-hydroxyphenyl ketones, such as 1-hydroxycyclohexyl phenyl ketone, phenyl (1-hydroxyisopropyl)ketone, 2-hydroxy-1-[4-(2-hroxyethoxy) phenyl]-2-methyl-1-propanone, and 4-isopropylphenyl(1-hydroxyisopropyl)ketone, benzil dimethyl ketal, and oligo-[2-hydroxy-2-methyl-1-[4-(1-methylvinyl)phenyl] propanone] (Esacure KIP 150 from Lamberti).

It is possible for LED UV light sources to be designed to emit light at shorter wavelengths. For LED light sources emitting at wavelengths from between about 100 and about 300 nm, photoinitiators absorbing at the shorter wavelengths can be used. Such photoinitiators are selected from: benzophenones, such as benzophenone, 4-methyl benzophenone, 2,4,6-trimethyl benzophenone, and dimethoxybenzophenone, and , 1-hydroxyphenyl ketones, such as 1-hydroxycyclohexyl phenyl ketone, phenyl (1-hydroxyisopropyl)ketone, 2-hydroxy-1-[4-(2-hroxyethoxy) phenyl]-2-methyl-1-propanone, and 4-isopropylphenyl(1-hydroxyisopropyl)ketone, benzil dimethyl ketal, and oligo-[2-hydroxy-2-methyl-1-[4-(1-methylvinyl)phenyl] propanone] (Esacure KIP 150 from Lamberti).

LED light sources can also be designed to emit visible light, which can also be used to cure optical fiber coatings, inks, buffers, and matrix materials. For LED light sources emitting light at wavelengths from about 475 nm to about 900nm, suitable photoinitiators are selected from: camphorquinone, 4,4'-bis(diethylamino) benzophenone (Chivacure EMK from Chitec), 4,4'-bis(N,N'-dimethylamino) benzophenone (Michler's ketone), bis(2,4,6-trimethylbenzoyl)-phenylphosphineoxide (Irgacure 819 or BAPO from Ciba), metallocenes such as bis (eta 5-2-4-cyclopentadien-1-yl) bis [2,6-difluoro-3-(1H-pyrrol-1-yl) phenyl] titanium (Irgacure 784 from Ciba), and the visible light photoinitiators from Spectra Group Limited, Inc. such as 5,7-diiodo-3-butoxy-6-fluorones, (H-Nu-470), 2,4,5,7-tetraiodo-3-hydroxy-6-fluorone (H-Nu-535), 2,4,5,7-tetraiodo-3-hydroxy-9-cyano-6-fluorone (H-Nu-635),

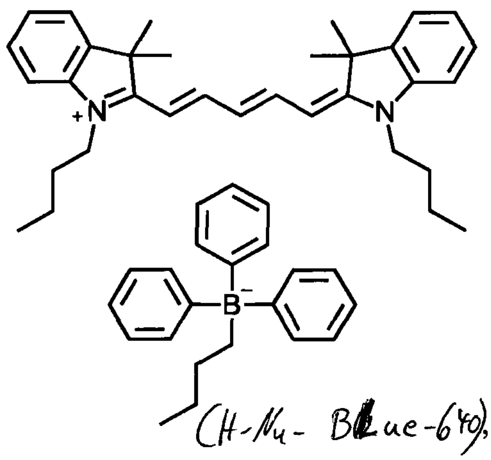

(H-Nu- Blue-640), and

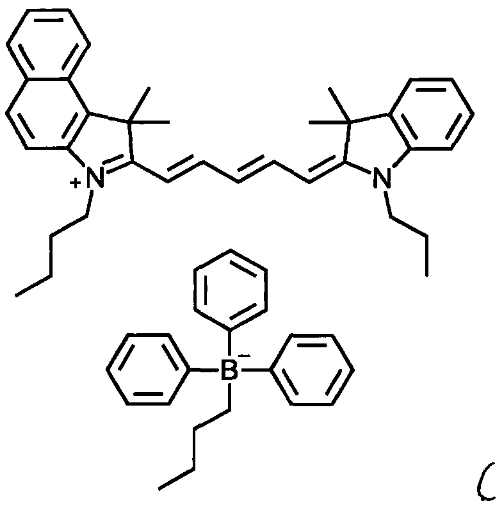

(H-Nu-Blue-660).

In one embodiment, the light emitted by the LED is UVA radiation, which is radiation with a wavelength between 320 and 400nm.

In one embodiment, the light emitted by the LED is UVB radiation, which is radiation with a wavelength between 280 and 320nm.

In one embodiment, the light emitted by the LED is UVC radiation, which is radiation with a wavelength between 100 and 280nm.

In one embodiment, the present composition comprises, relative to the total weight of the composition, from 0.5 wt% to 7 wt% of one or more free radical photoinitiators. In one embodiment, the present composition comprises, relative to the total weight of the composition, from 1 wt% to 6 wt% of one or more free radical photoinitiators, relative to the total weight of the composition. In another embodiment, the present composition comprises, relative to the total weight of the composition, from about 2 wt% to about 5 wt% of one or more free radical photoinitiators.

Normally, cationic photoinitiators are not required or desired in urethane (meth)acrylate oligomer based radiation curable coatings to function as photoinitiators. It is known however, to use small amounts of commercially available cationic photoinitiators in radiation curable coatings to function chemically as a source of photo latent acid. The photo latent acid has value in the coating as its presence is known to enhance fiber strength. See U.S. Patent Number 5,181,269.

Optical fiber production process offers a unique condition for LED application. It is well-known that the current LED light (360 nm and longer) can provide good through cure of a coating layer because its longer wave longer wavelength is suitable for good penetration.

Regarding surface cure, it has been noted in LED curing of other types of coatings, that the LED curing results on the surface of the coating is less than satisfactory because of oxygen inhibition. Oxygen inhibition of LED induced surface cure is not an issued in optical fiber production because blanketing the surface of the optical fiber with inert nitrogen gas during cure of the coatings has been standard in the optical fiber industry for some time. In practice for coating optical fibers with radiation curable coatings, the curing environment of the coating is in a controlled, small quartz tube surrounded area with an atmosphere of Nitrogen resulting in very low oxygen levels being present (as low as 20 ppm). Thus LED can offer both good through-cure and good surface cure on optical fiber coatings.

It is anticipated that there will be a transition period for the introduction of LED lamps into the optical fiber industry. During this period, they may be used in conjunction with conventional mercury lamps, rather than completely replacing them.

The measurement of the amount of curing a radiation curable urethane (meth)acrylate based coating has undergone is typically done by conducting a "Percent Reacted Acrylate Unsaturation" (abbreviate "%RAU") determination. For the coatings of the instant claimed invention, upon curing with an LED light having a wavelength of from 100 nm to 900nm, the %RAU at the top surface of the coating is 60% or greater, preferably 70% or greater, more preferably 75% or greater, more highly preferably 80% or greater, most preferably 85% or greater, most highly preferably 90% or greater, and highest preferably 95% or greater. It is possible to achieve a %RAU of 100% using LED's to cure the compositions of the instant claimed invention.

It is the top surface of the coating where the %RAU is measured, because as previously described; LED light is expected to provide good through cure. However, the amount of cure at the top surface is critical to reach the indicated level in order to produce viable coated optical fiber.

Also disclosed is a coated optical fiber comprising an optical fiber and at least one coating, wherein said at least one coating is produced by coating the optical fiber with at least one radiation curable coating composition for an

optical fiber comprising:

(a) at least one urethane (meth) acrylate oligomer;
(b) at least one reactive diluent monomer; and
(c) at least one photoinitiator;

to obtain an uncured coated optical fiber, and curing said uncured coated optical fiber by irradiating with a light emitting diode (LED) light having a wavelength from 100 nm to 900nm, to obtain a cured coating having a top surface, said cured coating having a Percent Reacted Acrylate Unsaturation (%RAU) at the top surface of 60% or greater.

The disclosed radiation curable compositions may be applied on conventional commercially available optical fiber, bend resistant optical fiber, photonic crystal fiber and they can even be applied on hermetically sealed optical fiber. The radiation curable coatings are viable for application to both Single Mode and MultiMode optical fiber.

In coating an optical fiber, first the optical fiber is drawn on a draw tower and then the Primary Coating is applied, and with wet on dry processing, the next step is for a LED to be used to emit light sufficient to cure the Primary Coating, said cured Primary coating having a Percent Reacted Acrylate Unsaturation (%RAU) at the top surface of about 60% or greater.

With wet on wet processing the next step is to apply the Secondary Coating.

Either way, after the Primary Coating is applied, then the Secondary Coating is applied on top of the Primary Coating, then LED's are used to emit light to cure the radiation curable coatings on the optical fiber resulting in the Secondary Coating being cured.

LED's are commercially available. Suppliers of commercially available LED's have been previously listed in this document.

After the Secondary Coating is cured, a layer of "ink coating" is optionally applied and then the coated and inked optical fiber may be further configured into either a Loose Tube configuration or placed alongside other coated and inked optical fibers in a "ribbon assembly" and a radiation curable matrix coating is used to hold the optical fibers in the desired location in the ribbon assembly or into some other type of configuration suitable for deployment in a telecommunications network.

It is also possible that individual coated fibers might be coated with an "upjacketing" coating that increases the outer diameter of the fiber considerably. Fibers that are upjacketed may be inked, colored or clear coated. Upjacketed fibers may be further processed for deployment in a telecommunications network.

It is also possible to bundle fibers together in multiple arrays that may or may not be planar, thus producing an enhanced ribbon structure or blown fiber design.

In one embodiment, the radiation curable coating is being used either as a primary coating, or as a secondary coating, or as a matrix coating, or as an ink coating or as an upjacketing coating.

The process of the instant claimed invention for coating an optical fiber comprises:

(a) operating a glass draw tower to produce a glass optical fiber;
(b) coating said glass optical fiber with at least one radiation curable coating composition for an optical fiber, wherein said at least one radiation curable coating composition comprises:

(i) at least one urethane (meth)acrylate oligomer;
(ii) at least one reactive diluent monomer; and
(iii) at least one photoinitiator;

to obtain a coated glass optical fiber with an uncured coating, and
(c) curing said uncured coating on said coated glass optical fiber by irradiating said uncured coating with a light emitting diode (LED) light, having a wavelength from 100 nm to 900nm, to obtain a cured coating having a top surface, said cured coating having a % Reacted Acrylate Unsaturation (%RAU) at the top surface of 60% or greater.

In one embodiment of the process of the claimed invention, for application of an Upjacketing Coating the line speed of the optical fiber at least 25 m/minute.

In one embodiment of the process of the claimed invention, for application of the Upjacketing Coating the line speed of the optical fiber is at least 100 m/minute.

In one embodiment of the process of the claimed invention, for application of the Primary and Secondary Coating the line speed of the optical fiber is at least 500 m/minute.

In one embodiment of the process of the claimed invention, for application of the Primary and Secondary Coating the line speed of the optical fiber is at least 750 m/minute.

In one embodiment of the process of the claimed invention, for application of the Primary and Secondary

Coating the line speed of the optical fiber is at least 1000 m/minute.

In one embodiment of the process of the claimed invention, for application of the Ink Coating the line speed of the optical fiber is at no more than 3000 m/minute.

In one embodiment of the process, for application of the Primary and Secondary Coating the line speed of the optical fiber is at no more than about 2500 m/minute.

In one embodiment of the process, for application of the Primary and Secondary Coating the line speed of the optical fiber is at no more than about 2400 m/minute.

In one embodiment of the process, for application of the Primary and Secondary Coating the line speed of the optical fiber is at no more than about 2300 m/minute.

In one embodiment of the process, for application of the Primary and Secondary Coating the line speed of the optical fiber is at no more than about 2100 m/minute.

In one embodiment of the process, for application of the Primary and Secondary Coating the line speed of the optical fiber is from about 100 m/min to about 2500 m/min for application of the Primary and Secondary. In another embodiment of the process, the line speed of the optical fiber is from about 100 m/min to about 2400 m/min. In another embodiment of the process, the line speed of the optical fiber is from about 1000 m/min to about 2400 m/min. In another embodiment of the the line speed of the optical fiber is from about 1000 m/min to about 2300 m/min. In another embodiment of the process, the line speed of the optical fiber is from about 1,200 m/min to about 2300 m/min. In another embodiment of the process, the line speed of the optical fiber is from about 1,200 m/min to about 2100 m/min.

In one embodiment of the process, for application of the ink layer, the line speed of the optical fiber is between 500 meters/minute and 3000 meters/minute. In one embodiment of the process, for application of the ink layer, the line speed of the optical fiber is between 750 meters/minute and 2100 meters/minute.

In one embodiment of the process, for application of the upjacketing coating, the optical fiber is run at a line speed of between about 25 meters/minute and 100 meters/minute.

The specific examples herein disclosed are to be considered as being primarily illustrative.

EXAMPLES

The present invention is further illustrated with a number of examples. The components listed in these Examples have the following commercial names, are available from the listed source and have the indicated chemical composition.

Table 1. Description of Components Used in the Examples

| Components | Description | CAS Registry Number | Supplier |
|---|---|---|---|
| BHT | 3,5-di-tert-butyl -4-hydroxy toluene stabilizer . | 128-37-0 | Ashland |
| Camphorquinone | Camphorquinone | 10373-78-1 | Esstech |
| Chivacure 2-ITX | 2-isopropyl thioxanthone photosensitizer | 83846-86-0 | Chitec |
| Chivacure BMS | 4-benzoyl-4'-methyl diphenyl sulphide photoinitiator | 83846-85-9 | Chitec |
| Chivacure TPO | 2,4,6-trimethylbenzoyl diphenylphosphine oxide photoinitiator | 75980-60-8 | Chitec |
| CN-110 | bisphenol A epoxy acrylate oligomer | 55818-57-0 | Sartomer |
| CN120Z | bisphenol A epoxy acrylate oligomer | 55818-57-0 | Sartomer |
| CN549 | amine-modified polyester tetraacrylate | proprietary | Sartomer |
| CN971A80 | urethane acrylate oligomer 80% in SR-306 | proprietary + 42978-66-5 | Sartomer |
| Darocur 1173 | 2-hydroxy-2-methyl-1-phenyl-1-propanone photoinitiator | 7473-98-5 | Ciba |
| DC-190 | silicone | proprietary | Dow-Corning |
| DC-57 | silicone | proprietary | Dow-Corning |
| Ebecryl 350 | silicone acrylate | proprietary | Cytec |
| Irgacure 184 | 1-hydorxy cyclohexyl phenyl ketone photoinitiator | 947-19-3 | Ciba |

(continued)

| Components | Description | CAS Registry Number | Supplier |
|---|---|---|---|
| Irgacure 369 | 2-benzyl-2-(dimethylamino)-1-[4-(4-morpholino) phenyl]-1-butanone | 119313-12-1 | Ciba |
| Irgacure 819 | bis(2,4,6-trimethylbenzoyl)-phenylphosphineoxide photoinitiator | 162881-26-7 | Ciba |
| Irgacure 907 | 2-methyl-1-[4-(methylthio)phenyl]-2-morpholinopropanone-1 photoinitiator | 71868-10-5 | Ciba |
| Irgacure 2959 | 2-hydroxy-]-[4-(2-hydroxyethoxy) phenyl]-2-methyl-1-propanone | 106797-53-9 | Ciba |
| Irganox 1035 | thiodiethylene bis-(3,5-di-tert-butyl-4-hydroxy) hydrocinnamate antioxidant | 41484-35-9 | Ciba |
| Oligomer A | PPG/TDI/HEA urethane acrylate oligomer, MW = 1580 | proprietary | DSM Desotech |
| Orange pigment dispersion | cromophtal orange dispersion 20% in SR-351 | 72102-84-2+15625-89-5 | DSM Desotech |
| SR-238 | hexanediol diacrylate monomer | 13048-33-4 | Sartomer |
| SR-295 | pentaerythritol tetraacrylate monomer | 4986-89-4 + 3524-68-3 | Sartomer |
| SR-306 | tripropylene glycol diacrylate monomer | 42978-66-5 | Sartomer |
| SR-339 | phenoxyethyl acrylate monomer | 48145-04-6 | Sartomer |
| SR-349 | ethoxylated bisphenol A diacrylate | 64401-02-1 | Sartomer |
| SR-351 | trimethylolpropane triacrylate monomer | 15625-89-5 | Sartomer |
| SR-504D | ethoxylated nonylphenol acrylate | 678991-31-6 + 127087-87-0 | Sartomer |
| SR-506 | isobornyl acrylate monomer | 5888-67-1 | Sartomer |
| Tinuvin 123 | bis-(1-octyloxy-2,2,6,6-tetramethyl-4-piperidinyl) sebacate light stabilizer | 129757-67-1 | Ciba |
| White pigment dispersion | titanium dioxide 60% dispersion in SR-351 | 13463-67-7 + 15625-89-5 | DSM Desotech |

Table 2A. Secondary Coatings and Inks Using Summit UV Black Diamond LED Light Source at 8 m/min in air

| | Example 1 | Example 2 | Example 3 | Example 4 |
|---|---|---|---|---|
| Components(amounts in wt. %) | This is a Comparative Example cures with Fusion Systems 300 W/in D lamp Mercury Vapor UV light | Example of the Invention, cures with LED light at 365 nm | This is a Comparative Example cures with Fusion Systems 300 W/in D lamp Mercury Vapor UV light | Example of the Invention, cures with LED light at 365 nm |
| Oligomer A | 30.00 | 28.20 | | |
| CN971A80 | | | 16.90 | 16.06 |
| CN-110 | 40.00 | 37.60 | | |
| CN120Z | | | 23.54 | 22.35 |
| SR-295 | | | 12.52 | 11.89 |
| SR-351 | | | 13.00 | 12.35 |
| SR-506 | 7.50 | 7.05 | | |

(continued)

| | Example 1 | Example 2 | Example 3 | Example 4 |
|---|---|---|---|---|
| Components(amounts in wt. %) | This is a Comparative Example cures with Fusion Systems 300 W/in D lamp Mercury Vapor UV light | Example of the Invention, cures with LED light at 365 nm | This is a Comparative Example cures with Fusion Systems 300 W/in D lamp Mercury Vapor UV light | Example of the Invention, cures with LED light at 365 nm |
| SR-339 | 8.50 | 7.99 | | |
| SR-306 | 6.00 | 5.64 | 4.09 | 3.89 |
| SR-238 | 4.50 | 4.23 | 5.96 | 5.66 |
| White pigment dispersion | | | 4.00 | 3.80 |
| Orange pigment dispersion | | | 9.00 | 8.55 |
| Chivacure TPO | 0.50 | 0.47 | | |
| Irgacure 184 | 2.00 | 1.88 | | |
| Irgacure 819 | | 1.00 | 1.09 | 1.04 |
| Irgacure 907 | | | 1.92 | 1.82 |
| Darocur 1173 | | | 2.50 | 2.38 |
| Chivacure BMS | | 3.00 | | |
| Chivacure 2-ITX | | | | 2.00 |
| CN549 | | 2.00 | | 3.00 |
| Irganox 1035 | 0.50 | 0.47 | | |
| BHT | | | 0.48 | 0.46 |
| Ebecryl 350 | | | 5.00 | 4.75 |
| DC-190 | 0.33 | 0.31 | | |
| DC-57 | 0.17 | 0.16 | | |
| % RAU at top surface | 42.6 | 69.4 | 50.7 | 61.1 |
| % RAU at bottom surface | 85.1 | 85.1 | 56.9 | 72.3 |

Table 2B. Secondary Coatings and Inks as described in Table 2A Using Phoseon RX Fireflex LED Light Source at 8 m/min in air

| | Example 5 | Example 6 | Example 7 | Example 8 |
|---|---|---|---|---|
| | **This is a Comparative Example** Formulation of Example 1 cures with Fusion Systems 300 W/in D lamp Mercury Vapor UV light | Example of the Invention, Formulation of Example 2 cures with LED light at 395 nm | **This is a Comparative Example** Formulation of Example 3 cures with Fusion Systems 300 W/in D lamp Mercury Vapor UV light. | Example of the Invention, Formulation of Example 4 of the Invention, cures with LED light at 395 nm |
| % RAU at top surface | 45.7 | 61.5 | 44.8 | 65.7 |

(continued)

| | **Example 5** | **Example 6** | **Example 7** | **Example 8** |
|---|---|---|---|---|
| | **This is a Comparative Example** Formulation of Example 1 cures with Fusion Systems 300 W/in D lamp Mercury Vapor UV light | Example of the Invention, Formulation of Example 2 cures with LED light at 395 nm | **This is a Comparative Example** Formulation of Example 3 cures with Fusion Systems 300 W/in D lamp Mercury Vapor UV light. | Example of the Invention, Formulation of Example 4 of the Invention, cures with LED light at 395 nm |
| % RAU at bottom surface | 88.3 | 91.0 | 73.8 | 80.6 |

Table 3. Secondary Coatings Using Summit UV LED Light Source on Ink Line

| Components | Example 9 | Example 10 |
|---|---|---|
| | **Comparative Example** Formulation of Example 1 cures with Fusion Systems 300 W/in D lamp Mercury Vapor UV light | Example of the Invention Formulation of Example 1, cures with LED light at 365nm |
| 25 m/min, nitrogen | | |
| % RAU at top surface | 71.1 | 91.9 |
| % RAU at bottom surface | 88.3 | 94.2 |
| | | |
| 200 m/min, nitrogen | | |
| % RAU at top surface | 52.3 | 74.0 |
| % RAU at bottom surface | 81.5 | 82.9 |
| | | |
| 300 m/min, nitrogen | | |
| % RAU at top surface | 40.5 | 66.6 |
| % RAU at bottom surface | 69.5 | 75.6 |

Table 4. Inks Using Summit UV LED Light Source on Ink Line

| Components | Examples 11 | Example 12 |
|---|---|---|
| | **Comparative Example** {Formulation of Example 3} cures with Fusion Systems 300 W/in D lamp Mercury Vapor UV light. | Formulation of Example 3 of the Invention, cures with LED light at 365nm |
| 200 m/min, nitrogen | | |

(continued)

| Components | Examples 11 | Example 12 |
|---|---|---|
| | **Comparative Example** {Formulation of Example 3} cures with Fusion Systems 300 W/in D lamp Mercury Vapor UV light. | Formulation of Example 3 of the Invention, cures with LED light at 365nm |
| % RAU at top surface | 59.9 | 68.8 |
| | | |
| 300 m/min, nitrogen | | |
| % RAU at top surface | 48.9 | 64.6 |

Table 5. Conventional Curable (Comparative Example) and LED curable Primary Coating

| Components | Example 13 | Example 14 |
|---|---|---|
| Components(amounts in wt. %) | **Comparative Example** cures with Fusion Systems 300 W/in D lamp Mercury Vapor UV light | Example of the Invention, cures with LED light at 395 nm |
| Polyether urethane acrylate | 65.1 | 64.1 |
| SR-504D | 21.7 | 21.2 |
| SR-339 | 9.0 | 9.0 |
| SR-349 | 1.0 | 1.0 |
| Irgacure 819 | 1.5 | 1.5 |
| Isopropyl thioxanthone | - | 1.5 |
| Tinuvin 123 | 0.1 | 0.1 |
| Irganox 1035 | 0.6 | 0.6 |
| γ-Mereaptopropyl trimethoxy silane | 1.0 | 1.0 |

Table 6. Conventional Curable (Comparative Example) and LED curable Matrix Material

| | Example 15 | Example 16 |
|---|---|---|
| Components(amounts in wt. %) | **Comparative Example** cures with Fusion Systems 300 W/in D lamp Mercury Vapor UV light | Example of the Invention, cures with LED light at 395 nm |
| Polyether urethane acrylate | 27.0 | 25.5 |
| CN120Z | 45.0 | 43.0 |
| SR-339 | 7.7 | 7.7 |
| SR-506 | 6.8 | 6.8 |
| SR-306 | 5.5 | 5.5 |
| SR-238 | 4.0 | 4.0 |
| Irgacure 184 | 2.0 | - |
| Chivacure TPO | 0.5 | - |

(continued)

| | Example 15 | Example 16 |
|---|---|---|
| Components(amounts in wt. %) | **Comparative Example** cures with Fusion Systems 300 W/in D lamp Mercury Vapor UV light | Example of the Invention, cures with LED light at 395 nm |
| Irgacure 819 | - | 1.0 |
| Chivacure BMS | - | 3.0 |
| CN-549 | - | 2.0 |
| Irganox 1035 | 0.5 | 0.5 |
| DC-190 | 1.0 | 1.0 |

Table 7. Conventional Curable (Comparative Example) and LED curable Buffer Coating

| | Example 17 | Example 18 |
|---|---|---|
| Components(amounts in wt. %) | **Comparative Example** cures with Fusion Systems 300 W/in D lamp Mercury Vapor UV light | Example of the Invention, cures with LED light at 395 nm |
| Polyether urethane acrylate | 35.0 | 34.0 |
| CN120Z | 26.0 | 26.0 |
| SR-306 | 33.0 | 32.0 |
| Darocur 1173 | 4.0 | - |
| Irgacure 819 | - | 1.0 |
| Chivacure BMS | - | 3.0 |
| CN-549 | - | 2.0 |
| DC-190 | 2.0 | 2.0 |

Table 8. Conventional Curable (Comparative Example) and LED curable Buffer Coating cures with visible LED light source

| | Example 19 | Example 20 |
|---|---|---|
| Components(amounts in wt. %) | **Comparative Example** cures with Fusion Systems 300 W/in D lamp Mercury Vapor UV light | Example of the Invention, cures with LED light at 455 nm |
| Polyether urethane acrylate | 35.0 | 34.0 |
| CN120Z | 26.0 | 26.0 |
| SR-306 | 33.0 | 32.0 |
| Darocur 1173 | 4.0 | - |
| Camphorquinone | - | 4.0 |
| CN-549 | - | 2.0 |
| DC-190 | 2.0 | 2.0 |

Table 9. Conventional Curable (Comparative Example) and LED curable Buffer Coating cures with UVB LED light source

| | Example 21 | Example 22 |
|---|---|---|
| Components(amounts in wt. %) | **Comparative Example** cures with Fusion Systems 300 W/in D lamp Mercury Vapor UV light | Example of the Invention, cures with LED light at 285 nm |
| Polyether urethane acrylate | 35.0 | 35.0 |
| CN120Z | 26.0 | 26.0 |
| SR-306 | 33.0 | 33.0 |
| Darocur 1173 | 4.0 | - |
| Irgacure 819 | - | 1.0 |
| Irgacure 2959 | - | 3.0 |
| DC-190 | 2.0 | 2.0 |

Table 10. Conventional Curable (Comparative Example) and LED curable Buffer Coating cures with UVC LED light source

| Components | Example 22 | Example 23 |
|---|---|---|
| Components(amounts in wt. %) | **Comparative Example** cures with Fusion Systems 300 W/in D lamp Mercury Vapor UV light | Example of the Invention, cures with LED light at 210 nm |
| Polyether urethane acrylate | 35.0 | 35.0 |
| CN120Z | 26.0 | 26.0 |
| SR-306 | 33.0 | 33.0 |
| Darocur 1173 | 4.0 | - |
| Chivacure TPO | - | 1.0 |
| Irgacure 369 | - | 3.0 |
| DC-190 | 2.0 | 2.0 |

Table 11: Example 24 Secondary Coatings for Optical Fiber, curable with a 395 nm LED light source

| **Component** | **Example 24A Comparative Example, NOT LED curable** | **Example 24B** | **Example 24C** | **Example 24D** | **Example 24E** | **Example 24F** | **Example 24G** |
|---|---|---|---|---|---|---|---|
| | **wt. %** | **wt. %** | **wt. %** | **wt. %** | **wt. %** | **wt. %** | **wt. %** |
| PPG/TD1/HEA | 30.00 | 28.20 | 29.00 | 30.00 | 30.20 | 29.00 | 30.00 |
| CN-110 | 40.00 | 37.60 | 38.00 | | 15.00 | 38.00 | |
| CN120Z | | | | 40.00 | 15.00 | | 40.00 |
| Isobornyl acrylate | 7.50 | 7.05 | 7.00 | 7.50 | 7.05 | 7.00 | 7.50 |
| Phenoxyethyl acrylate | 8.50 | 7.99 | 8.50 | 8.50 | 7.99 | 8.50 | 8.50 |
| Tripropylene glycol diacrylate | 6.00 | 5.64 | 7.00 | 6.00 | 5.64 | 7.00 | 6.00 |

(continued)

| Component | Example 24A Comparative Example, NOT LED curable | Example 24B | Example 24C | Example 24D | Example 24E | Example 24F | Example 24G |
|---|---|---|---|---|---|---|---|
| Hexanediol diacrylate | 4.50 | 4.23 | 5.00 | 4.50 | 4.23 | 5.00 | 4.50 |
| Chivacure TPO | 0.50 | 0.47 | | | 0.47 | | |
| Lucirin TPO-L | | | 1.00 | | | 1.00 | |
| Irgacure 184 | 2.00 | 1.88 | | 0.50 | 1.88 | | 0.50 |
| Irgacure 819 | | 1.00 | 0.50 | 0.50 | 1.00 | 0.50 | 0.50 |
| Irgacure 907 | | | 0.50 | 1.00 | | 0.50 | 1.00 |
| Esacure KIP 100F | | | 2.00 | | | 2.00 | |
| Chivacure BMS | | 3.00 | 0.50 | | 3.00 | 0.50 | |
| Chivacure 2-ITX | | | | 0.50 | | | 0.50 |
| CN549 | | 2.00 | | | 2.00 | | |
| Irganox 1035 | 0.50 | 0.47 | 0.50 | 0.50 | 0.47 | 0.50 | 0.50 |
| DC-190 | 0.33 | 0.31 | 0.33 | 0.33 | 0.31 | 0.33 | 0.33 |
| DC-57 | 0.17 | 0.16 | 0.17 | 0.17 | 0.16 | 0.17 | 0.17 |
| Total | 100.00 | 100.00 | 100.00 | 100.00 | 100.00 | 100.00 | 100.00 |

Table 12: Example 25 Another Secondary Coating For Optical Fiber that is LED Curable

| Components (in wt. %) | Example 25A | Example 25B | Example 25C | Example 25D | Example 25E |
|---|---|---|---|---|---|
| PPG1000/TDI/HEA | 23.47 | 23.47 | 23.47 | 23.47 | 23.47 |
| HHPA/Epon 828/HEA | 19.78 | 19.78 | 19.78 | 1.9.78 | 19.78 |
| CN120Z | 22.70 | 20.00 | 25.37 | 20.00 | 26.83 |
| 4EO bisphenol A diacrylate | | | | | 6.00 |
| 10EO bisphenol A diacrylate | | | | 6.00 | |
| PEG400 diacrylate | | | 6.00 | | |
| Isobornyl acrylate | 5.97 | | | | |
| Phenoxyethyl acrylate | | 6.00 | | | |
| Tripropylene glycol diacrylate | 22.70 | 24.43 | 20.00 | 26.00 | 18.00 |
| Hexanediol diacrylate | | | | | |
| Chivacure TPO | | 0.50 | | 1.00 | 3.00 |
| Lucirin TPO-L | 1.00 | 1.00 | 1.00 | 1.00 | 0.25 |
| Irgacure 184 | | 0.50 | | | |
| Irgacure 819 | 0.50 | 0.94 | 0.50 | 0.25 | 0.29 |
| Irgacure 907 | 0.50 | | 0.50 | 0.25 | 0.50 |
| Esacure KIP100F | 2.00 | 2.00 | 2.00 | 0.87 | 0.50 |

(continued)

| Components (in wt. %) | Example 25A | Example 25B | Example 25C | Example 25D | Example 25E |
|---|---|---|---|---|---|
| Chivacure BMS | 0.50 | 0.50 | 0.50 | 0.50 | 0.50 |
| CN549 | | | | | |
| Irganox 1035 | 0.50 | 0.50 | 0.50 | 0.50 | 0.50 |
| DC-190 | 0.25 | 0.25 | 0.25 | 0.25 | 0.25 |
| DC-57 | 0.13 | 0.13 | 0.13 | 0.13 | 0.13 |
| Total | 100.00 | 100.00 | 100.00 | 100.00 | 100.00 |

Table 13: Example 26 Another Secondary Coating For Optical Fiber that is LED Curable at 395 nm.

| Components | Example 26A | Example 26B | Example 26C | Example 26D | Example 26E |
|---|---|---|---|---|---|
| | wt. % | wt. % | wt. % | wt. % | wt. % |
| BomarKWS4131 | 10.00 | 10.00 | 10.00 | 10.00 | 10.00 |
| CN-110 | | 2.50 | 5.00 | 5.00 | 7.50 |
| CN120Z | 5.00 | 2.50 | | 5.00 | 7.50 |
| 4EO bisphenol A diacrylate | 80.00 | 70.00 | 75.00 | 60.00 | 70.00 |
| 10EO bisphenol A diacrylate | | 1.00 | | 5.00 | |
| PEG400 diacrylate | | 1.75 | | 2.50 | |
| Isobornyl acrylate | | 2.00 | | 2.50 | |
| Phenoxyethyl acrylate | | 2.25 | 5.00 | 2.50 | |
| Tripropylene glycol diacrylate | | 3.00 | | | |
| Hexanediol diacrylate | | | | 2.50 | |
| Chivacure TPO | | 0.50 | 1.00 | 0.33 | 1.00 |
| Lucirin TPO-L | 1.00 | 1.00 | 1.00 | 0.33 | 1.00 |
| Irgacure 184 | | | | 0.34 | |
| Irgacure 819 | 0.50 | 0.50 | 0.50 | 0.50 | 0.50 |
| Irgacure 907 | 0.50 | | 0.50 | 0.50 | 0.50 |
| Esacure KIP 100F | 2.00 | 2.00 | 1.00 | 2.00 | 1.00 |
| Chivacure BMS | 0.50 | 0.50 | 0.50 | 0.50 | 0.50 |
| CN549 | | | | | |
| Irganox 1035 | 0.50 | | 0.50 | 0.12 | 0.25 |
| Irganox 1076 | | 0.25 | | 0.13 | 0.12 |
| Irganox 1010 | | 0.25 | | 0.25 | 0.13 |
| Total | 100.00 | 100.00 | 100.00 | 1.00.00 | 100.00 |

Table 14: Example 27 Another Secondary Coating For Optical Fiber that is LED Curable at 395 nm.

| Components | Example 27A | Example 27B | Example 27C | Example 27D | Example 27E |
|---|---|---|---|---|---|
| | wt. % | wt. % | wt. % | wt. % | wt. % |
| PTHF 650/TDI/HEA | 38.00 | 19.00 | 19.00 | 20.00 | 12.00 |

(continued)

| Components | Example 27A | Example 27B | Example 27C | Example 27D | Example 27E |
|---|---|---|---|---|---|
| PTHF/IPDI/HEA | | 19.00 | | | 12.00 |
| PTHF/adipic acid/IPDI/HEA | | | 19.00 | | 12.00 |
| PTHF/IPDI/TDI/HEA | | | | 18.00 | 2.00 |
| CN-110 | | 14.00 | | 28.00 | 14.00 |
| CN120Z | 28.00 | 14.00 | 28.00 | | 14.00 |
| PEG400 diacrylate | | 8.50 | 8.50 | | |
| Isobornyl acrylate | 10.00 | 10.00 | 10.00 | 10.00 | 10.00 |
| Phenoxyethyl acrylate | 10.00 | 10.00 | 10.00 | 10.00 | 10.00 |
| Tripropylene glycol diacrylate | | | | | |
| Hexanediol diacrylate | 8.50 | | | 8.50 | 8.50 |
| Chivacure TPO | | 1.00 | 1.00 | | |
| Lucirin TPO-L | 1.00 | 1.00 | 1.00 | 0.50 | 0.50 |
| Irgacure 184 | | | | 0.50 | 0.50 |
| Irgacure 819 | 0.50 | 0.50 | 0.50 | 0.50 | 0.50 |
| Irgacure 907 | 0.50 | 0.50 | 0.50 | 0.50 | 0.50 |
| Esacure KIP100F | 2.00 | 0.50 | 0.50 | 2.00 | 2.00 |
| Chivacure BMS | 0.50 | 1.00 | 1.00 | 0.50 | 0.50 |
| Irganox 1035 | 0.50 | | 0.50 | | |
| Irganox 1076 | | 0.25 | | 0.25 | 0.25 |
| Irganox 1010 | | 0.25 | | 0.25 | 0.25 |
| DC-190 | 0.33 | 0.33 | 0.33 | 0.33 | 0.33 |
| DC-57 | 0.17 | 0.17 | 0.17 | 0.17 | 0.17 |
| Total | 100.00 | 100.00 | 100.00 | 100.00 | 100.00 |

Table 15: Example 28 Another Secondary Coating For Optical Fiber that is LED Curable at 395 nm.

| Components | Example 28A | Example 28B | Example 28C | Example 28D | Example 28E |
|---|---|---|---|---|---|
| | **w.t %** | **wt. %** | **wt. %** | **wt. %** | **wt. %** |
| PTHF/adipic acid/IPDI/HEA | 48.50 | 48.50 | 48.50 | 48.50 | 48.50 |
| CN-110 | | 11.90 | 21.90 | 15.00 | 17.00 |
| CN120Z | 21.90 | 10.00 | | 6.90 | 4.90 |
| Tripropylene glycol diacrylate | 2.50 | 2.50 | 2.50 | 2.50 | 2.50 |
| Hexanediol diacrylate | 20.60 | 20.60 | 20.60 | 20.60 | 20.60 |
| Chivacure TPO | | 1.00 | 1.00 | | |
| Lucirin TPO-L | 1.00 | 1.00 | 1.00 | 0.50 | 0.50 |
| Irgacure 184 | | | | 0.50 | 0.50 |
| Irgacure 819 | 0.50 | 0.50 | 0.50 | 0.50 | 0.50 |
| Irgacure 907 | 0.50 | 0.50 | 0.50 | 0.50 | 0.50 |

(continued)

| Components | Example 28A | Example 28B | Example 28C | Example 28D | Example 28E |
|---|---|---|---|---|---|
| Esacure KIP100F | 2.00 | 0.50 | 0.50 | 2.00 | 2.00 |
| Chivacure BMS | 0.50 | 1.00 | 1.00 | 0.50 | 0.50 |
| Irganox 1035 | 1.70 | | 1.00 | | |
| Irganox 1076 | | 0.85 | 0.70 | | 1.50 |
| Irganox 1010 | | 0.85 | | 1.70 | 0.20 |
| DC-190 | 0.20 | 0.20 | 0.20 | 0.20 | 0.20 |
| DC-57 | 0.10 | 0.10 | 0.10 | 0.10 | 0.10 |
| Total | 100.00 | 100.00 | 100.00 | 100.00 | 100.00 |

| Table 16: Example 29 Another Secondary Coating For Optical Fiber that is LED Curable at 395 nm **Components** | **Example 29A** | **Example 29B** | **Example 29C** | **Example 29D** | **Example 29E** |
|---|---|---|---|---|---|
| | **wt. %** | **wt. %** | **wt. %** | **wt. %** | **wt. %** |
| PPG 1000/TDI/HEA | | | 10.00 | 21.20 | |
| PTHF 650/TDI/HEA | | 11.20 | | | |
| PTHF/IPDI/HEA | 21.20 | 10.00 | 11.20 | 5.00 | 21.20 |
| CN-110 | | | 15.00 | | 30.00 |
| CN120Z | 30.00 | 30.00 | 15.00 | 25.00 | |
| 4EO bisphenol A diacrylate | | 6.00 | | | |
| 10EO bisphenol A diacrylate | 11.00 | 5.00 | 11.00 | 10.00 | 11.00 |
| PEG400 diacrylate | 6.00 | 6.00 | 6.00 | 6.00 | 6.00 |
| Isobornyl acrylate | | | | | |
| Phenoxyethyl acrylate | 12.00 | 12.00 | 12.00 | 12.00 | 12.00 |
| Tripropylene glycol diacrylate | | 7.00 | | 3.00 | 10.00 |
| Hexanediol diacrylate | 14.00 | 7.00 | 14.00 | 11.00 | 4.00 |
| Chivacure TPO | | 1.00 | 1.00 | | |
| Lucirin TPO-L | 1.00 | 1.00 | 1.00 | 0.50 | 0.50 |
| Irgacure 184 | | | | 0.50 | 0.50 |
| Irgacure 819 | 0.50 | 0.50 | 0.50 | 0.50 | 0.50 |
| Irgacure 907 | 0.50 | 0.50 | 0.50 | 0.50 | 0.50 |
| Esacure KIP100F | 2.00 | 0.50 | 0.50 | 3.00 | 2.00 |
| Chivacure BMS | 0.50 | 1.00 | 1.00 | 0.50 | 0.50 |
| Irganox 1035 | | 0.50 | 0.40 | 0.25 | |
| Irganox 1076 | 0.50 | | 0.50 | 0.25 | 0.50 |
| Irganox 1010 | 0.40 | 0.40 | | 0.40 | 0.40 |
| DC-190 | 0.20 | 0.20 | 0.20 | 0.20 | 0.20 |
| DC-57 | 0.20 | 0.20 | 0.20 | 020 | 0.20 |

(continued)

| Table 16: Example 29 Another Secondary Coating For Optical Fiber that is LED Curable at 395 nm **Components** | **Example 29A** | **Example 29B** | **Example 29C** | **Example 29D** | **Example 29E** |
|---|---|---|---|---|---|
| Total | 100.00 | 100.00 | 100.00 | 100.00 | 100.00 |

Table 17: Example 30 Another Secondary Coating For Optical Fiber that is LED Curable at 395 nm

| **Components** | **Example 30** | **Example 30A** | **Example 30B** | **Example 30C** | **Example 30D** |
|---|---|---|---|---|---|
| | **wt. %** | **wt. %** | **wt. %** | **wt. %** | **wt. %** |
| PTHF 650/TDI/HEA | | 27.00 | | | |
| PTHF/IPDI/HEA | | 26.00 | | 25.00 | |
| PTHF/adipic acid/IPDI/HEA | | | 26.00 | | |
| PTHF/IPDI/TDI/HEA | 53.00 | | 27.00 | 27.00 | 53.00 |
| CN-110 | | 8.10 | | 7.00 | |
| CN120Z | 17.20 | 7.00 | 17.20 | 10.20 | 17.20 |
| Isobornyl acrylate | 12.00 | 12.00 | 12.00 | 12.00 | 12.00 |
| Phenoxyethyl acrylate | 10.00 | 10.00 | 10.00 | 10.00 | 10.00 |
| Tripropylene glycol diacrylate | 2.00 | 2.00 | 2.00 | 1.10 | 2.00 |
| Chivacure TPO | | 1.00 | 1.00 | | |
| Lucirin TPO-L | 1.00 | 1.00 | 1.00 | 0.50 | 0.50 |
| Irgacure 184 | | | | 0.50 | 0.50 |
| Irgacure 819 | 0.50 | 0.50 | 0.50 | 0.50 | 0.50 |
| Irgacure 907 | 0.50 | 0.50 | 0.50 | 0.50 | 0.50 |
| Esacure KIP100F | 2.00 | 0.50 | 0.50 | 3.00 | 2.00 |
| Chivacure BMS | 0.50 | 1.00 | 1.00 | 0.50 | 0.50 |
| Irganox 1035 | 1.20 | 1.20 | | | 1.20 |
| Irganox 1076 | | 0.60 | 1.20 | | |
| Irganox 1010 | | 0.60 | | 1.20 | |
| DC-190 | 0.10 | 0.50 | | 0.50 | 0.10 |
| DC-57 | | 0.50 | 0.10 | 0.50 | |
| Total | 100.00 | 100.00 | 100.00 | 100.00 | 100.00 |

Table 18: Example 31 Primary Coating Suitable for LED cure

| **Components** | **Example 31A** | **Example 31B** |
|---|---|---|
| | **wt. %** | **wt. %** |
| Acclaim PPG 4200/TDI/HEA | 47.05 | |
| Acclaim PPG 4200/Priplast 3190/IPDI/HEA | | 47.00 |
| 3EO bisphenol A diacrylate | 0.84 | 0.84 |
| Ethoxylated nonylphenol acrylate | 43.62 | |

(continued)

| Components | Example 31A | Example 31B |
|---|---|---|
| | wt. % | wt. % |
| Propoxylated nonylphenol acrylate | | 43.64 |
| Lucirin TPO-L | 5.00 | 5.00 |
| Irgacure 819 | 2.00 | 2.00 |
| Irganox 1035 | 0.47 | |
| Irganox 1076 | | 0.50 |
| Tinuvin 123 | 0.09 | 0.09 |
| A-189 | 0.93 | 0.93 |
| Total | 100.00 | 100.00 |

Table 19: Example 32 Primary Coating Suitable for LED cure

| Components | Example 32A | Example 32B |
|---|---|---|
| | wt. % | wt. % |
| Acclaim PPG 4200/TDI/HEA | 47.56 | |
| PPG/IPDI/HEA | | 45.47 |
| 3EO bisphenol A diacrylate | 0.85 | |
| 10EO bisphenol A diacrylate | | 1.00 |
| Ethoxylated nonylphenol acrylate | 44.09 | |
| Propoxylated nonylphenol acrylate | | 46.00 |
| Lucirin TPO-L | 5.00 | 5.00 |
| Irgacure 819 | 1.00 | 1.00 |
| Irganox 3790 | | 0.50 |
| Irganox 1035 | 0.47 | |
| Irganox 1076 | | |
| Tinuvin 123 | 0.09 | 0.09 |
| A-189 | 0.94 | 0.94 |
| Total | 100.00 | 100.00 |

Table 20: Example 33 Primary Coating Suitable for LED cure with a 395 nm LED array.

| | Example 33A | Example 33B |
|---|---|---|
| Components | wt. % | wt. % |
| PPG2000IPDI/TDI/HEA | 47.00 | 45.80 |
| Tripropylene glycol diacrylate | 0.80 | 0.80 |
| Ethoxylated nonylphenol acrylate | 43.80 | |
| Propoxylated nonylphenol acrylate | | 45.00 |
| Lucirin TPO-L | 5.00 | 5.00 |
| Irgacure 819 | 2.00 | 2.00 |

(continued)

| | Example 33A | Example 33B |
|---|---|---|
| **Components** | **wt. %** | **wt. %** |
| Irganox 3790 | | 0.25 |
| Irganox1035 | 0.50 | |
| Irganox 1076 | | 0.25 |
| A-189 | 0.90 | 0.90 |
| Total | 100.00 | 100.00 |

Table 21: Example 34 Primary Coating Suitable for LED cure

| | Example 34A | Example 34B |
|---|---|---|
| **Components** | **wt. %** | **wt. %** |
| BR-3741 | 48.00 | |
| PPG4000/TDS/HEA diblock | | 24.00 |
| PPG/IPDI/HEA | | 24.00 |
| Ethoxylated nonylphenol acrylate | 38.11 | |
| Propoxylated nonylphenol acrylate | | 38.10 |
| Caprolactone acrylate | 4.90 | 2.45 |
| | | 2.45 |
| Vinyl caprolactam Lucirin TPO-L | 5.00 | 5.00 |
| Irgacure 819 | 2.00 | 2.00 |
| Irganox 3790 | | 0.33 |
| Irganox 1035 | 0.98 | 0.33 |
| Irganox 1076 | | 0.33 |
| 2-acryloxypropyl trimethoxy silane | 0.98 | 0.98 |
| Pentaerythritol tetrakis (3-mercaptopropionate) | 0.03 | 0.03 |
| Total | 100.00 | 100.00 |

Table 22: Example 35 Primary Coating Suitable for LED cure

| Example 35 | Example 35A | Example 35B |
|---|---|---|
| **Components** | **wt. %** | **wt. %** |
| Acclaim PPG 4200/TDI/HEA | 66.00 | 30.00 |
| Acclaim PPG 4200/Priplast 3190/IPDL/HEA | | 30.00 |
| 3EO bisphenol A diacrylate | 5.50 | 10.50 |
| Ethoxylated nonylphenol acrylate | 11.15 | 6.00 |
| Propoxylated nonylphenol acrylate | | 6.15 |
| Caprolactone acrylate | | |
| Isodecyl acrylate | 9.80 | 4.90 |
| Tridecyl acrylate | | 4.90 |

(continued)

| Example 35 | Example 35A | Example 35B |
|---|---|---|
| **Components** | **wt. %** | **wt. %** |
| Lucirin TPO-L | 4.00 | 4.00 |
| Irgacure 819 | 1.00 | 1.00 |
| Irganox 3790 | | 0.25 |
| Irganox 1035 | 0.75 | 0.25 |
| Irganox 1076 | | 0.25 |
| Tinuvin 123 | 0.40 | 0.40 |
| Lowilite 20 | 0.15 | 0.15 |
| A-189 | 1.25 | 1.25 |
| Total | 100.00 | 100.00 |

Table 23: Example 36 Primary Coating Suitable for LED cure

| Components | Example 36A | Example 36B |
|---|---|---|
| | **wt. %** | **wt. %** |
| PPG4000/TDS/HEA diblock | 66.00 | 33.00 |
| PPG2000/TDS/HEA | | 33.00 |
| 3EO bisphenol A diacrylate | 5.00 | 2.50 |
| 10EO bisphenol A diacrylate | | 2.50 |
| Ethoxylated nonylphenol acrylate | 10.10 | 5.05 |
| Propoxylated nonylphenol acrylate | | 5.05 |
| Isodecyl acrylate | 11.60 | 5.80 |
| Tridecyl acrylate | | 5.80 |
| Lucirin TPO-L | 4.00 | 4.00 |
| Irgacure 819 | 1.00 | 1.00 |
| Irganox 3790 | | 0.25 |
| Irganox 1035 | 0.75 | 0.25 |
| Irganox 1076 | | 0.25 |
| Tinuvin 123 | 0.40 | 0.40 |
| Lowilite 20 | 0.15 | 0.15 |
| A-189 | 1.00 | 1.00 |
| Total | 100.00 | 100.00 |

Table 24: Example 37 Primary Coatings Suitable for LED cure

| Components | Example 37A | Example 37B |
|---|---|---|
| | **wt. %** | **wt. %** |
| PPG2000/TDS/HEA | 63.00 | 30.00 |
| PPG/PTHF/IPDI/HEA | | 33.00 |

(continued)

| Components | Example 37A | Example 37B |
|---|---|---|
| | wt. % | wt. % |
| Phenoxyethyl acrylate | 3.00 | 3.00 |
| Tripropylene glycol diacrylate | 1.00 | 1.00 |
| Ethoxylated nonylphenol acrylate | 19.25 | 10.00 |
| Propoxylated nonylphenol acrylate | | 9.25 |
| Vinyl caprolactam | 6.50 | 6.50 |
| Lucirin TPO-L | 4.00 | 4.00 |
| Irgacure 819 | 1.00 | 1.00 |
| Irganox 3790 | | 0.20 |
| Irganox 1035 | 0.60 | 0.20 |
| Irganox 1076 | | 0.20 |
| Lowilite 20 | 0.15 | 0.15 |
| A-189 | 1.50 | 1.50 |
| Total | 100.00 | 100.00 |

Table 25: Example 38 Primary Coatings Suitable for LED cure

| Components | Example 38A | Example 38B |
|---|---|---|
| | wt. % | wt. % |
| PPG2000/TDS/HEA | 56.00 | 28.00 |
| PPG/IPDI/HEA | | 28.00 |
| Tripropylene glycol diacrylate | 0.50 | 0.50 |
| Ethoxylated nonylphenol acrylate | 29.75 | 15.00 |
| Propoxylated nonylphenol acrylate | | 14.75 |
| Vinyl caprolactam | 6.50 | 6.50 |
| Lucirin TPO-L | 4.00 | 4.00 |
| Irgacure 819 | 1.00 | 1.00 |
| Irganox 3790 | | 0.20 |
| Irganox 1035 | 0.60 | 0.20 |
| Irganox 1076 | | 0.20 |
| Lowilite 20 | 0.15 | 0.15 |
| A-189 | 1.50 | 1.50 |
| Total | 100.00 | 100.00 |

Table 26: Example 39 Primary Coatings Suitable for LED cure

| Components | Example 39A | Example 39B |
|---|---|---|
| | wt. % | wt. % |
| PPG2000/TDS/HEA | | 33.00 |

(continued)

| Components | Example 39A | Example 39B |
|---|---|---|
| | wt. % | wt. % |
| Acclaim PPG 4200/Priplast 3190/IPDI/HEA | 66.00 | 33.00 |
| 3EO bisphenol A diacrylate | 3.20 | 3.20 |
| Ethoxylated nonylphenol acrylate | 10.00 | 5.00 |
| Propoxylated nonylphenol acrylate | | 5.00 |
| Tridecyl acrylate | 7.00 | 7.00 |
| Vinyl caprolactam | 6.00 | 6.00 |
| Lucirin TPO-L | 4.00 | 4.00 |
| Irgacure 819 | 1.00 | 1.00 |
| Irganox 3790 | 1.40 | 0.40 |
| Irganox 1035 | | 0.50 |
| Irganox 1076 | | 0.50 |
| Tinuvin 123 | 0.40 | 0.40 |
| A-189 | 1.00 | 1.00 |
| Total | 100.00 | 100.00 |

Table 27: Example 40 Primary Coatings Suitable for LED cure

| Components | Example 40A | Example 40B |
|---|---|---|
| | wt. % | wt. % |
| Acclaim PPG 4200/Priplast 3I90/IPDI/HEA | | 25.50 |
| PTHF/Desmodur W/IPDI/HEA | 50.50 | 25.00 |
| Ethoxylated nonylphenol acrylate | | 19.30 |
| Propoxylated nonylphenol acrylate | 38.60 | 19.30 |
| Lucirin TPO-L | 4.00 | 4.00 |
| Irgacure 819 | 1.00 | 1.00 |
| Irganox 3790 | | 0.40 |
| Irganox 1035 | 1.10 | 0.35 |
| Irganox 1076 | | 0.35 |
| Isooctyl-3-mercaptopropionate | 4.30 | 4.30 |
| A-189 | 0.50 | 0.50 |
| Total | 100.00 | 100.00 |

Table 28: Example 41 Primary Coatings Suitable for LED cure

| Components | Example 41A | Example 41B |
|---|---|---|
| | wt. % | wt. % |
| PPG/PTHF/IPDI/HEA | 37.20 | 20.00 |
| PPG/IPDI/HEA | | 17.20 |

(continued)

| Components | Example 41A | Example 41B |
|---|---|---|
| | wt. % | wt. % |
| 10EO bisphenol A diacrylate | 3.00 | 3.00 |
| Phenoxyethyl acrylate | 25.00 | 25.00 |
| Tripropylene glycol diacrylate | | |
| Ethoxylated nonylphenol acrylate | 28.00 | 14.00 |
| Propoxylated nonylphenol acrylate | | 14.00 |
| Lucirin TPO-L | 4.00 | 4.00 |
| Irgacure 819 | 1.00 | 1.00 |
| Irganox 3790 | | 0.30 |
| Irganox 1035 | | 0.30 |
| Irganox 1076 | 0.80 | 0.20 |
| A-189 | 1.00 | 1.00 |
| Total | 100.00 | 100.00 |

Table 29: Example 42 Primary Coatings Suitable for LED cure

| Components | Example 42A | Example 42B |
|---|---|---|
| | wt. % | wt. % |
| PPG/PTHF/IPDI/HEA | | 39.00 |
| PPG/IPDI/HEA | 69.00 | 30.00 |
| 3EO bisphenol A diacrylate | 8.50 | 4.50 |
| 10EO bisphenol A diacrylate | | 4.00 |
| Ethoxylated nonylphenol acrylate | 12.60 | 6.60 |
| Propoxylated nonylphenol acrylate | | 6.00 |
| Vinyl caprolactam | 1.40 | 1.40 |
| Lucirin TPO-L | 4.00 | 4.00 |
| Irgacure 819 | 1.00 | 1.00 |
| Irganox 3790 | | 1.00 |
| Irganox 1035 | 2.50 | 1.00 |
| Irganox 1076 | | 0.50 |
| A-189 | 1.00 | 1.00 |
| Totals | 100.00 | 100.00 |

| Table 30: Example 43 | Example 43A | Example 43B | Example 43C | Example 43D | Example 43E |
|---|---|---|---|---|---|
| **Components** | wt. % | wt. % | wt. % | wt. % | wt. % |
| PPG/TDI/HEA | | 4.38 | 10.00 | | |
| CN971A80 | 16.06 | 10.00 | 5.06 | 10.00 | 16.06 |
| Acclaim PPG 4200/TDI/HEA | | 10.00 | 5.00 | 6.06 | 11.35 |

(continued)

| Table 30: Example 43 | **Example 43A** | **Example 43B** | **Example 43C** | **Example 43D** | **Example 43E** |
|---|---|---|---|---|---|
| **Components** | **wt. %** | **wt. %** | **wt. %** | **wt. %** | **wt. %** |
| CN-110 | | 2.00 | 5.00 | | 11.00 |
| CN120Z | 22.35 | 22.35 | 22.35 | 22.35 | |
| Pentaerythritol triacrylate | 11.89 | 3.89 | 11.89 | 11.89 | 11.89 |
| Trimethylpropane triacrylate | 12.35 | 8.65 | 12.35 | 0.00 | 8.35 |
| Isobornyl acrylate | | | | 10.35 | |
| Tripropylene glycol diacrylate | 3.89 | 3.89 | 3.89 | 3.89 | 3.89 |
| Hexanediol diacrylate | 5.66 | 5.66 | 5.66 | 5.66 | 5.66 |
| Ethoxylated nonylphenol acrylate | | | | | |
| White pigment dispersion | 3.80 | 3.80 | 3.80 | 3.80 | 3.80 |
| Orange pigment dispersion | 8.55 | 8.55 | 8.55 | 8.55 | 8.55 |
| Chivacure TPO | | | | | 2.00 |
| Lucirin TPO-L | | | 1.00 | | 1.00 |
| Irgacure 184 | | 1.38 | | 2.00 | 1.00 |
| Irgacure 819 | 1.04 | 1.04 | 1.04 | 1.04 | 1.04 |
| Irgacure 907 | 1.82 | 1.82 | 1.82 | 1.82 | 1.82 |
| Darocur 1173 | 2.38 | 2.38 | 2.38 | 2.38 | 2.38 |
| Chivacure 2-ITX | 2.00 | 2.00 | 2.00 | 2.00 | 2.00 |
| CN549 | 3.00 | 3.00 | 3.00 | 3.00 | 3.00 |
| Irganox 1035 | | | | | |
| BHT | 0.46 | 0.46 | 0.46 | 0.46 | 0.46 |
| Ebecryl 350 | 4:75 | 4.75 | 4.75 | 4.75 | 4.75 |
| total | 100.00 | 100.00 | 100.00 | 100.00 | 100.00 |

| Table 31: Example 44 | Example 44A-**Comparative Example**-not an example of the invention | Example 44B | Example 44C | Example 44D | Example 44E |
|---|---|---|---|---|---|
| Components | wt. % | wt. % | wt. % | wt. % | wt. % |
| PPG/TDI/HEA | | | 11.00 | | |
| CN971A80 | 16.90 | 16.90 | 5.90 | 16.90 | 6.00 |
| Acclaim PPG 4200/TDI/HEA | | | 5.50 | | 10.90 |
| CN-110 | | 11.00 | 5.50 | | |
| CN120Z | 23.54 | 12.54 | 23.54 | 23.54 | 23.54 |
| Ethoxylated bisphenol A diacrylate | | | 8.34 | | |
| Pentaerythritol triacrylate | 12.52 | 12.52 | 4.18 | 12.52 | 12.52 |

(continued)

| Table 31: Example 44 | Example 44A-**Comparative Example**-not an example of the invention | Example 44B | Example 44C | Example 44D | Example 44E |
|---|---|---|---|---|---|
| Components | wt. % | wt. % | wt. % | wt. % | wt. % |
| Trimethylpropane triacrylate | 13.00 | 13.00 | 13.00 | | 13.00 |
| Isobornyl acrylate | | | | 6.50 | |
| Phenoxyethyl acrylate | | | | 6.50 | |
| Tripropylene glycol diacrylate | 4.09 | 4.09 | 4.09 | 4.09 | 4.09 |
| Hexanediol diacrylate | 5.96 | 3.00 | 5.96 | 5.96 | 5.96 |
| Ethoxylated nonylphenol acrylate | | 2.96 | | | |
| White pigment dispersion | 4.00 | 4.00 | 4.00 | 4.00 | 4.00 |
| Orange pigment dispersion | 9.00 | 9.00 | 9.00 | 9.00 | 9.00 |
| Irgacure 184 | | | 1.92 | 1.25 | 2.50 |
| Irgacure 819 | 1.09 | 1.09 | 1.09 | 1.09 | 1.09 |
| Irgacure 907 | 1.92 | 1.92 | | 1.92 | 1.92 |
| Darocur 1173 | 2.50 | | 2.50 | 1.25 | |
| Chivacure BMS | | 1.25 | | | |
| Chivacure 2-ITX | | 1.25 | | | |
| BHT | 0.48 | 0.48 | 0.48 | 0.48 | 0.48 |
| Ebecryl 350 | 5.00 | 5.00 | 5.00 | 5.00 | 5.00 |
| Total | 100.00 | 100.00 | 100.00 | 100.00 | 100.00 |

Table 32: Example 45 Colored Secondary Coating Modified to be LED curable

| **Components** | **Example 45A** | **Example 45B** | **Example 45C** | **Example 45D** | **Example 45E** |
|---|---|---|---|---|---|
| | **wt. %** | **wt. %** | **wt. %** | **wt. %** | **wt. %** |
| DG-0022 PPG/TDI/HEA | 23.50 | 13.50 | 23.50 | 2.00 | 23.50 |
| CN971A80 | | 15.00 | | 23.50 | |
| CN120Z | 42.00 | 37.00 | 42.00 | 42.00 | 42.00 |
| Pentaerythritol triacrylate | | | 7.00 | | |
| Trimethylpropane triacrylate | | | 3.11 | | |
| Tripropylene glycol diacrylate | 14.50 | 14.50 | 10.72 | 14.50 | 14.50 |
| Hexanediol diacrylate | 9.44 | 9.44 | 3.11 | 7.00 | 9.44 |
| Ethoxylated nonylphenol acrylate | 0.49 | 0.49 | 0.49 | 1.00 | 0.49 |
| White pigment dispersion | 0.80 | 0.80 | 0.80 | 0.80 | 0.80 |

(continued)

| Components | Example 45A | Example 45B | Example 45C | Example 45D | Example 45E |
|---|---|---|---|---|---|
| | wt. % | wt. % | wt. % | wt. % | wt. % |
| Orange pigment dispersion | 1.80 | 1.80 | 1.80 | 1.80 | 1.80 |
| Lucirin TPO-L | 2.00 | 2.00 | 1.00 | 2.00 | 1.00 |
| Irgacure 819 | 1.00 | 1.00 | 1.00 | 0.93 | 0.75 |
| Irgacure 907 | 0.50 | 0.50 | 0.50 | 0.50 | 0.50 |
| Esacure KIP100F | 2.00 | 1.00 | 1.00 | 1.00 | 0.75 |
| Darocur 1173 | | 1.00 | 2.00 | | 0.50 |
| Chivacure BMS | 0.50 | 0.50 | 0.50 | 0.50 | 0.50 |
| Chivacure 2-ITX | | | | 1.00 | 2.00 |
| BHT | 0.49 | 0.49 | 0.49 | 0.49 | 0.49 |
| Ebecryl 350 | | | 0.33 | | |
| DC-190 | 0.66 | 0.66 | 0.33 | 0.66 | 0.66 |
| DC-57 | 0.32 | 0.32 | 0.32 | 0.32 | 0.32 |
| Total | 100.00 | 100.00 | 100.00 | 100.00 | 100.00 |

Table 33: Example 46 LED curable Matrix Coatings

| Components | Example 46 A | Example 46 B | Example 46 C | Example 46 D | Example 46 E |
|---|---|---|---|---|---|
| | wt. % | wt. % | wt. % | wt. % | wt. % |
| PTHF 650/TDI/HEA | 38.00 | 36.00 | 36.00 | 38.00 | 30.00 |
| CN120Z | 28.00 | 30.00 | 30.00 | 28.00 | 36.00 |
| Isobornyl acrylate | 9.48 | 9.48 | 10.00 | 9.48 | 6.50 |
| Phenoxyethyl acrylate | 12.00 | 12.00 | 10.00 | 12.00 | 10.00 |
| Hexanediol diacrylate | 6.50 | 6.50 | 7.98 | 6.50 | 11.48 |
| Lucirin TPO-L | 2.00 | 2.00 | 2.00 | 1.00 | 2.00 |
| Irgacure 819 | 1.00 | 1.00 | 1.00 | 1.25 | 1.00 |
| Esacure KIP 100F | 1.00 | 1.00 | 1.00 | 1.50 | 1.00 |
| Irganox 245 | 0.50 | 0.50 | 0.50 | 0.75 | 0.50 |
| Tinuvin 292 | 0.50 | 0.50 | 0.50 | 0.50 | 0.50 |
| DC-190 | 0.66 | 0.66 | 0.66 | 0.66 | 0.66 |
| DC-57 | 0.36 | 0.36 | 0.36 | 0.36 | 0.36 |
| Total | 100.00 | 100.00 | 100.00 | 100.00 | 100.00 |

Percent Reacted Acrylate Unsaturation for the Primary Coating abbreviated as % RAU Primary Test Method:

Degree of cure on the Top Surface of a Primary Coating on an optical fiber or metal wire is determined by FTIR using a diamond ATR accessory. FTIR instrument parameters include: 100 co-added scans, 4 $cm^{-1}$ resolution, DTGS detector, a spectrum range of 4000 - 650 $cm^{-1}$, and an approximately 25% reduction in the default mirror velocity to improve signal-to-noise. Two spectra are required; one of the uncured liquid coating that corresponds to the coating on the fiber or wire and one of the Primary Coating on the fiber or wire.

The spectrum of the liquid coating is obtained after completely covering the diamond surface with the coating. The liquid should be the same batch that is used to coat the fiber or wire if possible, but the minimum requirement is

that it must be the same formulation. The final format of the spectrum should be in absorbance.

A thin film of contact cement is smeared on the center area of a 6 $cm^2$ (1-inch square) piece of 0.08 mm (3-mil) Mylar film. After the contact cement becomes tacky, a piece of the optical fiber or wire is placed in it. Place the sample under a low power optical microscope. The coatings on the fiber or wire are sliced through to the glass using a sharp scalpel. The coatings are then cut lengthwise down the top side of the fiber or wire for approximately 1 centimeter, making sure that the cut is clean and that the Secondary coating does not fold into the Primary Coating. Then the coatings are spread open onto the contact cement such that the Primary Coating next to the glass or wire is exposed as a flat film. The glass fiber or wire is broken away in the area where the Primary Coating is exposed.

The exposed Primary Coating on the Mylar film is mounted on the center of the diamond with the fiber or wire axis parallel to the direction of the infrared beam. Pressure should be put on the back of the sample to insure good contact with the crystal. The resulting spectrum should not contain any absorbances from the contact cement. If contact cement peaks are observed, a fresh sample should be prepared. It is important to run the spectrum immediately after sample preparation rather than preparing any multiple samples and running spectra when all the sample preparations are complete. The final format of the spectrum should be in absorbance.

For both the liquid and the cured coating, measure the peak area of both the acrylate double bond peak at 810 $cm^{-1}$ and a reference peak in the 750 - 780 $cm^{-1}$ region. Peak area is determined using the baseline technique where a baseline is chosen to be tangent to absorbance minima on either side of the peak. The area under the peak and above the baseline is then determined. The integration limits for the liquid and the cured sample are not identical but are similar, especially for the reference peak.

The ratio of the acrylate peak area to the reference peak area is determined for both the liquid and the cured sample. Degree of cure, expressed as percent reacted acrylate unsaturation (% RAU), is calculated from the equation below:

$$\% RAU = \frac{(R_L - R_F)\ x\ 100}{R_L}$$

Where $R_L$ is the area ratio of the liquid sample and $R_F$ is the area ratio of the cured primary.

Percent Reacted Acrylate Unsaturation for the Secondary Coating abbreviated as % RAU Secondary Test Method

The degree of cure of the secondary coating on an optical fiber is determined by FTIR using a diamond ATR accessory. FTIR instrument parameters include: 100 co-added scans, 4 $cm^{-1}$ resolution, DTGS detector, a spectrum range of 4000 - 650 $cm^{-1}$, and an approximately 25% reduction in the default mirror velocity to improve signal-to-noise. Two spectra are required; one of the uncured liquid coating that corresponds to the coating on the fiber and one of the outer coating on the fiber. The spectrum of the liquid coating is obtained after completely covering the diamond surface with the coating. The liquid should be the same batch that is used to coat the fiber if possible, but the minimum requirement is that it must be the same formulation. The final format of the spectrum should be in absorbance.

The fiber is mounted on the diamond and sufficient pressure is put on the fiber to obtain a spectrum suitable for quantitative analysis. For maximum spectral intensity, the fiber should be placed on the center of the diamond parallel to the direction of the infrared beam. If insufficient intensity is obtained with a single fiber, 2-3 fibers may be placed on the diamond parallel to each other and as close as possible. The final format of the spectrum should be in absorbance.

For both the liquid and the cured coating, measure the peak area of both the acrylate double bond peak at 810 $cm^{-1}$ and a reference peak in the 750 - 780 $cm^{-1}$ region. Peak area is determined using the baseline technique where a baseline is chosen to be tangent to absorbance minima on either side of the peak. The area under the peak and above the baseline is then determined. The integration limits for the liquid and the cured sample are not identical but are similar, especially for the reference peak.

The ratio of the acrylate peak area to the reference peak area is determined for both the liquid and the cured sample. Degree of cure, expressed as percent reacted acrylate unsaturation (% RAU), is calculated from the equation below:

$$\% RAU = \frac{(R_L - R_F)\ x\ 100}{R_L}$$

where $R_L$ is the area ratio of the liquid sample and $R_F$ is the area ratio of the cured secondary coating.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description.

## Claims

**1.** A process for coating an optical fiber comprising:

(a) providing a glass optical fiber,
(b) coating said glass optical fiber with at least one radiation curable coating composition for an optical fiber, wherein said at least one radiation curable coating composition comprises:

(i) at least one urethane (meth) acrylate oligomer;
(ii) at least one reactive diluent monomer; and
(iii) at least one photoinitiator;

to obtain a coated glass optical fiber with an uncured coating, and
(c) curing said uncured coating on said coated glass optical fiber by irradiating said uncured coating with a light emitting diode (LED) light, having a wavelength from 100 nm to 900 nm, to obtain a cured coating having a top surface, said cured coating having a % Reacted Acrylate Unsaturation (%RAU) at the top surface of about 60 % or greater,
wherein the light emitting diode (LED) light has a wavelength of

- from 100 nm to 300 nm;
- from 300 nm to 475 nm; or
- from 475 nm to 900 nm,

and wherein

- when the light emitting diode light has a wavelength of 100-300 nm, the at least one photoinitiator is selected from benzophenones, benzophenone, 4-methyl benzophenone, 2,4,6-trimethyl benzophenone, dimethoxybenzophenone, 1-hydroxyphenyl ketones, 1-hydroxycyclohexyl phenyl ketone, phenyl(1-hydroxyisopropyl)ketone, 2-hydroxy-1-[4-(2-hydroxyethoxy)phenyl]-2-methyl-1-propanone, and 4-isopropylphenyl(1-hydroxyisopropyl)ketone, benzil dimethyl ketal, and oligo-[2-hydroxy-2-methyl-1-[4-(1-methylvinyl)phenyl]propanone];
- when the light emitting diode light has a wavelength of 300-475 nm, the at least one photoinitiator is selected from benzoylphosphine oxides, 2,4,6-trimethylbenzoyl diphenylphosphine oxide, 2,4,6-trimethylbenzoyl phenyl, ethoxy phosphine oxide, bis(2,4,6-trimethylbenzoyl)-phenylphosphineoxide, 2-methyl-1-[4-(methylthio)phenyl]-2-morpholinopropanone-1, 2-benzyl-2-(dimethylamino)-1-[4-(4-morpholinyl)phenyl]-1-butanone, 2-dimethylamino-2-(4-methyl-benzyl)-1-(4-morpholin-4-yl-phenyl)-butan-1-one, 4-benzoyl-4'-methyl diphenyl sulphide, 4,4'-bis(diethylamino)benzophenone, and 4,4'-bis(N,N-dimethylamino)benzophenone (Michler's ketone), and mixtures thereof; and
- when the light emitting diode light has a wavelength of 475-900 nm, the at least one photoinitiator is selected from camphorquinone, 4,4'-bis(diethylamino)benzophenone, 4,4'-bis(N,N'-dimethylamino)benzophenone (Michler's ketone), bis(2,4,6-trimethylbenzoyl)-phenylphosphineoxide, metallocenes, bis(eta 5-2-4-cyclopentadien-1-yl)bis[2,6-difluoro-3-(1H-pyrrol-1-yl)phenyl]titanium, 5,7-diiodo-3-butoxy-6-fluorone, 2,4,5,7-tetraiodo-3-hydroxy-6-fluorone, 2,4,5,7-tetraiodo-3-hydroxy-9-cyano-6-fluorone,

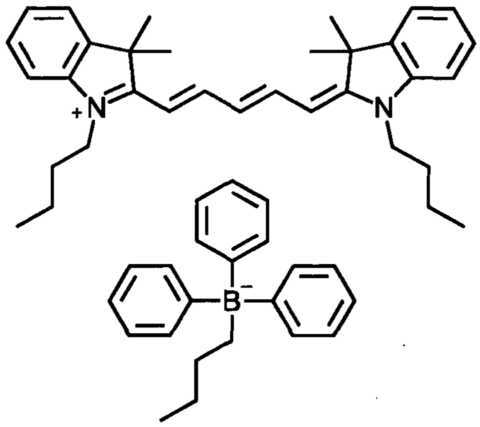

, and

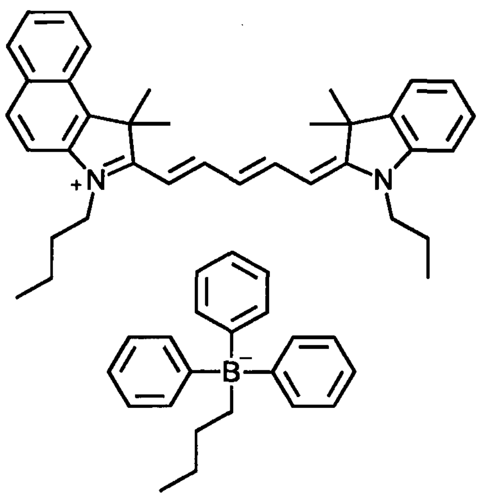

.

2. The process according to claim 1, wherein said glass optical fiber is provided by operating a glass draw tower to produce the glass optical fiber.

3. The process of claim 2, wherein the glass draw tower is operated at line speed of the optical fiber from 100 m/min to 2500 m/min, such as from 1000 m/min to 2400 m/min, or from 1200 m/min to 2300 m/min.

4. The process of any one of claims 1-3, wherein the photoinitiator is a Type I photoinitiator.

5. The process of any one of claims 1-3, wherein the photoinitiator is a Type II photoinitiator and the composition includes a hydrogen donor.

6. The process of any one of claims 1-5, wherein the coating composition is selected from the group consisting of a primary coating composition, a secondary coating composition, an ink coating composition, a buffer coating composition, a matrix coating composition, and an Upjacketing coating composition.

7. The process of any one of claims 1-6, wherein at least 15 % of the ingredients in the coating are bio-based, rather than petroleum based, preferably at least 20 % of the ingredients, more preferably at least 25 % of the ingredients.

**Patentansprüche**

1. Verfahren zur Beschichtung einer optischen Faser, umfassend:

(a) Bereitstellen einer optischen Glasfaser,
(b) Beschichten der optischen Glasfaser mit mindestens einer strahlungshärtbaren Beschichtungszusammensetzung für eine optische Faser, wobei die mindestens eine strahlungshärtbare Beschichtungszusammensetzung

(i) mindestens ein Urethan(meth)acrylat-Oligomer;
(ii) mindestens ein Reaktivverdünnermonomer; und
(iii) mindestens einen Fotoinitiator;

umfasst, um eine beschichtete optische Glasfaser mit einer nicht ausgehärteten Beschichtung zu erhalten, und (c) Aushärten der nicht ausgehärteten Beschichtung auf der beschichteten optischen Glasfaser durch Bestrahlung der nicht ausgehärteten Beschichtung mit einer Leuchtdiode (LED) mit einer Wellenlänge von 100 nm bis 900 nm, um eine ausgehärtete Beschichtung mit einer Oberfläche zu erhalten, wobei die ausgehärtete Beschichtung auf der Oberfläche eine % RAU (% umgesetzte Acrylat-Ungesättigtheit) von etwa 60 % oder höher aufweist, wobei das Licht der Leuchtdiode (LED) eine Wellenlänge

- von 100 nm bis 300 nm;
- von 300 nm bis 475 nm; oder
- von 475 nm bis 900 nm

hat,
und wobei,

- wenn das Licht der Leuchtdiode eine Wellenlänge von 100-300 nm hat, der mindestens eine Fotoinitiator ausgewählt ist aus Benzophenonen, Benzophenon, 4-Methylbenzophenon, 2,4,6-Trimethylbenzophenon, Dimethoxybenzophenon, 1-Hydroxylphenylketonen, 1-Hydroxylcyclohexylphenylketon, Phenyl(1-hydroxylisopropyl)keton, 2-Hydroxyl-1-[4-(2-hydroxylethoxy)phenyl]-2-methyl-1-propanon, und 4-Isopropylphenyl(1-hydroxylisopropyl)keton, Benzyldimethylketal und Oligo-[2-hydroxyl-2-methyl-1-[4-(1-methylvinyl)phenyl]propanon];
- wenn das Licht der Leuchtdiode eine Wellenlänge von 300-475 nm hat, der mindestens eine Fotoinitiator ausgewählt ist aus Benzoylphosphinoxiden, 2,4,6-Trimethylbenzoyldiphenylphosphinoxid, 2,4,6-Trimethylbenzoylphenyl, Ethoxyphosphinoxid, Bis(2,4,6-trimethylbenzoyl)-phenylphosphinoxid, 2-Methyl-1-[4-(methylthio)phenyl]-2-morpholinpropanon-1, 2-Benzyl-2-(dimethylamin)-1-[4-(4-morpholinyl)phenyl]-1-butanon, 2-Dimethylamin-2-(4-methyl-benzyl)-1-(4-morpholin-4-yl-phenyl)-butan-1-on, 4-Benzoyl-4'-methyldiphenylsulfid, 4,4'-Bis(diethylamin)benzophenon und 4,4'-Bis(N,N-dimethylamin)benzophenon (Michler's Keton) und Gemischen davon; und
- wenn das Licht der Leuchtdiode eine Wellenlänge von 475-900 nm hat, der mindestens eine Fotoinitiator ausgewählt ist aus Campherchinon, 4,4'-Bis(diethylamin)benzophenon, 4,4'-Bis(N,N'-dimethylamin)benzophenon (Michler's Keton), Bis(2,4,6-trimethylbenzoyl)-phenylphosphinoxid, Metallozenen, Bis(eta5-2-4-cyclopentadien-1-yl)bis[2,6-difluor-3-(1H-pyrrol-1-yl)phenyl]titan,5,7-Düod-3-butoxy-6-fluoron, 2,4,5,7-Tetraiod-3-hydroxyl-6-fluoron, 2,4,5,7-Tetraiod-3-hydroxyl-9-cyano-6-fluoron,

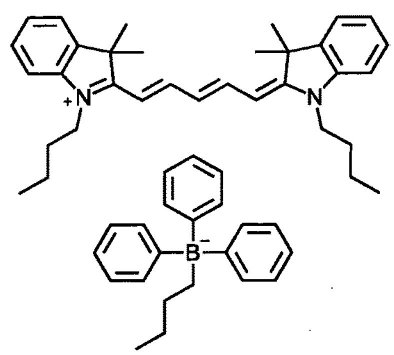

,

und

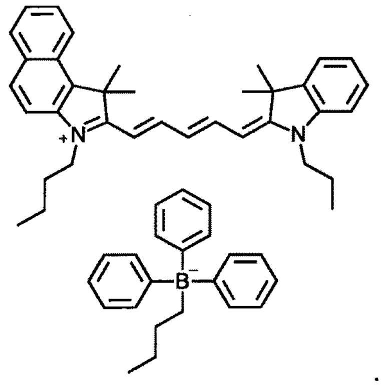

2. Verfahren nach Anspruch 1, wobei die optische Glasfaser durch Betrieb eines Glasziehturms zur Herstellung der optischen Glasfaser bereitgestellt wird.

3. Verfahren nach Anspruch 2, wobei der Glasziehturm mit einer Liniengeschwindigkeit der optischen Faser von 100 m/Min. bis 2500 m/Min. betrieben wird, wie etwa von 1000 m/Min. bis 2400 m/Min. oder von 1200 m/Min. bis 2300 m/Min.

4. Verfahren nach einem der Ansprüche 1-3, wobei der Fotoinitiator ein Fotoinitiator vom Typ I ist.

5. Verfahren nach einem der Ansprüche 1-3, wobei der Fotoinitiator ein Fotoinitiator vom Typ II ist und die Zusammensetzung einen Wasserstoffdonor enthält.

6. Verfahren nach einem der Ansprüche 1-5, wobei die Beschichtungszusammensetzung ausgewählt ist aus der Gruppe, bestehend aus einer primären Beschichtungszusammensetzung, einer sekundären Beschichtungszusammensetzung, einer Farbbeschichtungszusammensetzung, einer Pufferbeschichtungszusammensetzung, einer Matrixbeschichtungszusammensetzung und einer Ummantelungsbeschichtungszusammensetzung.

7. Verfahren nach einem der Ansprüche 1-6, wobei mindestens 15 % der Bestandteile der Beschichtung auf Biobasis statt auf Erdölbasis beruhen, bevorzugt mindestens 20 % der Bestandteile, bevorzugter mindestens 25 % der Bestandteile.

## Revendications

1. Procédé pour revêtir une fibre optique, comprenant les opérations consistant à :

(a) disposer d’une fibre optique en verre,
(b) revêtir ladite fibre optique en verre avec au moins une composition de revêtement durcissable par irradiation pour fibre optique, ladite au moins une composition de revêtement durcissable par irradiation comprenant :

(i) au moins un oligomère de (méth)acrylate d’uréthane ;
(ii) au moins un monomère diluant réactif ; et
(iii) au moins un photoamorceur ;

pour obtenir une fibre optique en verre revêtue d’un revêtement non durci, et
(c) durcir ledit revêtement non durci sur ladite fibre optique en verre revêtue par irradiation dudit revêtement non durci avec une lumière de diode électroluminescente (DEL), ayant une longueur d’onde de 100 nm à 900 nm, pour obtenir un revêtement durci ayant une surface supérieure, ledit revêtement durci ayant un pourcentage d’insaturation acrylate ayant réagi (% RAU) au niveau de la surface supérieure d’environ 60 % ou plus, dans lequel la lumière de diode électroluminescente (DEL) a une longueur d’onde

- de 100 nm à 300 nm ;
- de 300 nm à 475 nm ; ou
- de 475 nm à 900 nm

et dans lequel

- quand la lumière de diode électroluminescente a une longueur d'onde de 100 à 300 nm, l'au moins un photoamorceur est choisi parmi les benzophénones : la benzophénone, la 4-méthylbenzophénone, la 2,4,6-triméthylbenzophénone, la diméthoxybenzophénone, les 1-hydroxyphénylcétones : la 1-hydroxycyclohexylphénylcétone, la phényl(1-hydroxyisopropyl)cétone, la 2-hydroxy-1-[4-(2-hydroxyéthoxy)phényl]-2-méthyl-1-propanone, et la 4-isopropylphényl(1-hydroxyisopropyl)cétone, le benzyldiméthylcétal, et un oligo[2-hydroxy-2-méthyl-1-[4-(1-méthylvinyl)phényl]propanone] ;
- quand la lumière de diode électroluminescente a une longueur d'onde de 300 à 475 nm, l'au moins un photoamorceur est choisi parmi les oxydes de benzoylphosphine : l'oxyde de 2,4,6-triméthylbenzoyldiphénylphosphine, l'oxyde de 2,4,6-triméthylbenzoylphényléthoxyphosphine, l'oxyde de bis(2,4,6-triméthylbenzoyl)phénylphosphine, la 2-méthyl-1-[4-(méthylthio)phényl]-2-morpholinopropanone-1, la 2-benzyl-2-(diméthylamino)-1-[4-(4-morpholinyl)phényl]-1-butanone, la 2-diméthylamino-2-(4-méthylbenzyl)-1-(4-morpholin-4-ylphényl)butan-1-one, le sulfure de 4-benzoyl-4'-méthyldiphényle, la 4,4'-bis(diéthylamino)benzophénone, et la 4,4'-bis(N,N-diméthylamino)benzophénone (cétone de Michler), ainsi que leurs mélanges ; et
- quand la lumière de diode électroluminescente a une longueur d'onde de 475 à 900 nm, l'au moins un photoamorceur est choisi parmi la camphoquinone, la 4,4'-bis(diéthylamino)benzophénone, la 4,4'-bis(N,N'-diméthylamino)benzophénone (cétone de Michler), l'oxyde de bis(2,4,6-triméthylbenzoyl)phényl)phosphine, les métallocènes : le bis(éta-5-2-4-cyclopentadién-1-yl)bis[2,6-difluoro-3(1H-pyrrol-1-yl)phényl]titane, la 5,7-diiodo-3-butoxy-6-fluorone, la 2,4,5,7-tétraiodo-3-hydroxy-6-fluorone, la 2,4,5,7-tétraiodo-3-hydroxy-9-cyano-6-fluorone,

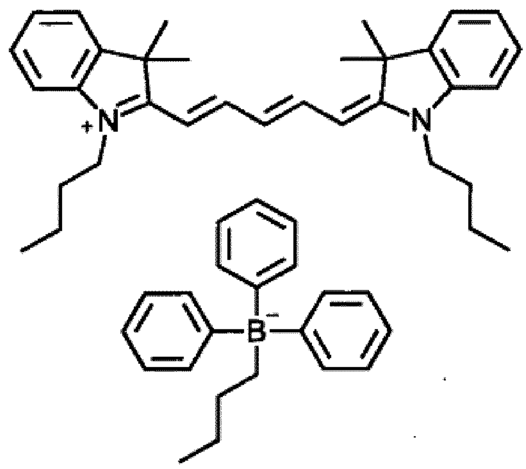

et

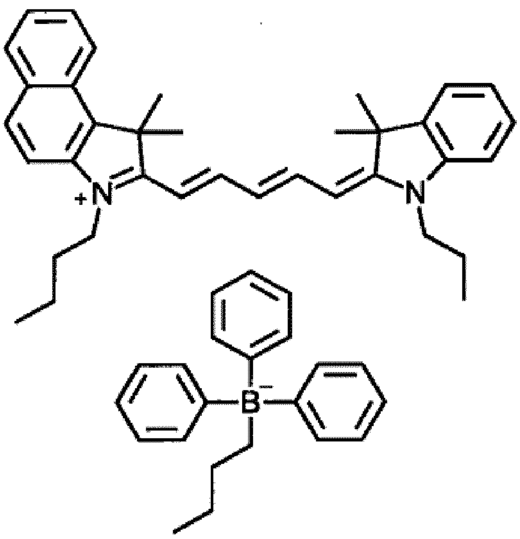

2. Procédé selon la revendication 1, dans lequel ladite fibre optique en verre est obtenue par mise en opération d'une tour de filage de verre pour produire la fibre optique en verre.

3. Procédé selon la revendication 2, dans lequel la tour de filage de verre opère à une vitesse de ligne de la fibre optique de 100 m/min à 2500 m/min, telle que de 1000 m/min à 2400 m/min, ou de 1200 m/min à 2300 m/min.

4. Procédé selon l'une quelconque des revendications 1 à 3, dans lequel le photoamorceur est un photoamorceur de type I.

5. Procédé selon l'une quelconque des revendications 1 à 3, dans lequel le photoamorceur est un photoamorceur de type II et la composition contient un donneur d'hydrogène.

6. Procédé selon l'une quelconque des revendications 1 à 5, dans lequel la composition de revêtement est choisie dans le groupe constitué par une composition de revêtement primaire, une composition de revêtement secondaire, une composition de revêtement d'encre, une composition de revêtement de tampon, une composition de revêtement de matrice, et une composition de revêtement de sur-gainage.

7. Procédé selon l'une quelconque des revendications 1 à 6, dans lequel au moins 15 % des ingrédients dans le revêtement sont d'origine biologique plutôt qu'à base de pétrole, de préférence au moins 20 % des ingrédients, mieux encore au moins 25 % des ingrédients.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7399982 B
- US 20070112090 A
- US 4733942 A
- US 6069186 A
- US 20030026919 A
- WO 2005103121 A
- US 20100242299 A
- US 7175712 B
- US 4472019 A
- US 4496210 A
- US 4514037 A
- US 4522465 A
- US 4624994 A
- US 4629287 A
- US 4682851 A
- US 4806574 A
- US 4806694 A
- US 4844604 A
- US 4849462 A
- US 4932750 A
- US 5093386 A
- US 5219896 A
- US 5292459 A
- US 5336563 A
- US 5416880 A
- US 5456984 A
- US 5496870 A
- US 5502145 A
- US 5596669 A
- US 5664041 A
- US 5696179 A
- US 5712035 A
- US 5787218 A
- US 5804311 A
- US 5812725 A
- US 5837750 A
- US 5845034 A
- US 5859087 A
- US 5847021 A
- US 5891930 A
- US 5907023 A
- US 5913004 A
- US 5933559 A
- US 5958584 A
- US 5977202 A
- US 5986018 A
- US 5998497 A
- US 6014488 A
- US 6023547 A
- US 6040357 A
- US 6052503 A
- US 6054217 A
- US 6063888 A
- US 6080483 A
- US 6085010 A
- US 6107361 A
- US 6110593 A
- US 6130980 A
- US 6136880 A
- US 6169126 B
- US 6180741 B
- US 6187835 B
- US 6191187 B
- US 6197422 B
- US 6214899 B
- US 6240230 B
- US 6246824 B
- US 6298189 B
- US 6301415 B
- US 6306924 B
- US 6309747 B
- US 6319549 B
- US 6323255 B
- US 6339666 B
- US 6359025 B
- US 6350790 B
- US 6362249 B
- US 6376571 B
- US 6391936 B
- US 6438306 B
- US 6472450 B
- US 6528553 B
- US 6534557 B
- US 6538045 B
- US 6563996 B
- US 6579618 B
- US 6599956 B
- US 6630242 B
- US 6638616 B
- US 6661959 B
- US 6714712 B
- US 6775451 B
- US 6797740 B
- US 6852770 B
- US 6858657 B
- US 6961508 B
- US 7041712 B
- US 7067564 B

- US 7076142 B
- US 7122247 B
- US 7135229 B
- US 7155100 B
- US 7171103 B
- US 7214431 B
- US 7221841 B
- US 7226958 B
- US 7276543 B
- US 7493000 B
- US 5181269 A

**Non-patent literature cited in the description**

- **E. FRED SCHUBERT ; E. FRED SCHUBERT.** Light-Emitting Diodes. Cambridge University Press, 2006
- Optical Fiber Coatings. **STEVEN R. SCHMID ; ANTHONY F. TOUSSAINT.** Specialty Optical Fibers Handbook. Elsevier Inc, 2007, 98
- Optical Fiber Coatings. **STEVEN R. SCHMID ; ANTHONY F. TOUSSAINT.** Specialty Optical Fibers Handbook. Elsevier Inc, 2007, 98
- Optical Fiber Coatings. **STEVEN R. SCHMID ; ANTHONY F. TOUSSAINT.** Specialty Optical Fibers Handbook. Elsevier Inc, 2007, 103-104
- preceding paragraph. *Optical Fiber Coatings,* 103-104
- Optical Fiber Coatings. **STEVEN R. SCHMID ; ANTHONY F. TOUSSAINT.** Specialty Optical Fibers Handbook. Elsevier Inc, 2007, 105